(19) **Europäisches Patentamt**
**European Patent Office**
**Office européen des brevets**

(11) **EP 4 096 117 B1**

(12) **EUROPEAN PATENT SPECIFICATION**

(45) Date of publication and mention
of the grant of the patent:
**14.02.2024 Bulletin 2024/07**

(21) Application number: **22382256.0**

(22) Date of filing: **18.03.2022**

(51) International Patent Classification (IPC):
*H04B 7/185* (2006.01)  *H01Q 1/28* (2006.01)

(52) Cooperative Patent Classification (CPC):
**H04B 7/18517; H01Q 1/286; H01Q 3/08**

(54) **ANTENNA SYSTEM FOR A SATELLITE COMMUNICATIONS DEVICE AND COMPUTER-IMPLEMENTED METHOD FOR OPERATING AN ANTENNA SYSTEM**

ANTENNENSYSTEM FÜR EINE SATELLITENKOMMUNIKATIONSVORRICHTUNG UND COMPUTERIMPLEMENTIERTES VERFAHREN ZUM BETREIBEN EINES ANTENNENSYSTEMS

SYSTÈME D'ANTENNE POUR DISPOSITIF DE COMMUNICATIONS PAR SATELLITE ET PROCÉDÉ MIS EN OEUVRE PAR ORDINATEUR PERMETTANT DE FAIRE FONCTIONNER UN SYSTÈME D'ANTENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.11.2022 Bulletin 2022/48**

(73) Proprietors:
• **TTI Norte, S.L.**
**39011 Santander (ES)**
• **Celestia Technologies Group UK, LTD.**
**Wingrave**
**Aylesbury**
**Buckinghamshire HP22 4LW (GB)**

(72) Inventors:
• **Gonzalez, Manuel J.**
**39011 Santander (ES)**
• **Pellón Sancho, Alberto**
**Wingrave, Aylesbury, HP22 4LW (GB)**

(74) Representative: **Clarke, Modet y Cía., S.L.**
**C/ Suero de Quiñones 34-36**
**28002 Madrid (ES)**

(56) References cited:
**WO-A1-2018/005581    US-A1- 2017 358 851**
**US-A1- 2021 234 270**

## Description

### FIELD

The present disclosure refers to antenna systems used in satellite communications devices.

### BACKGROUND

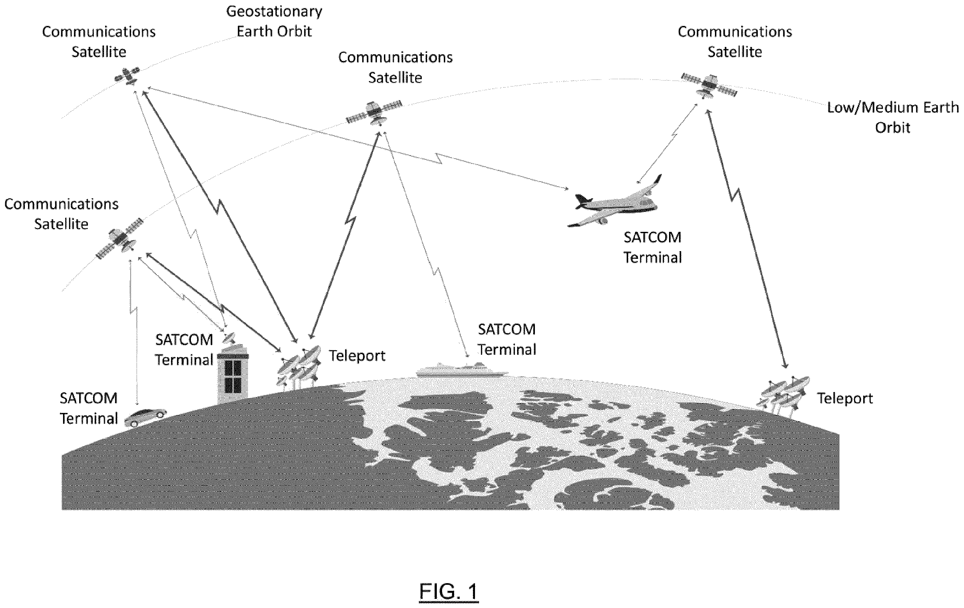

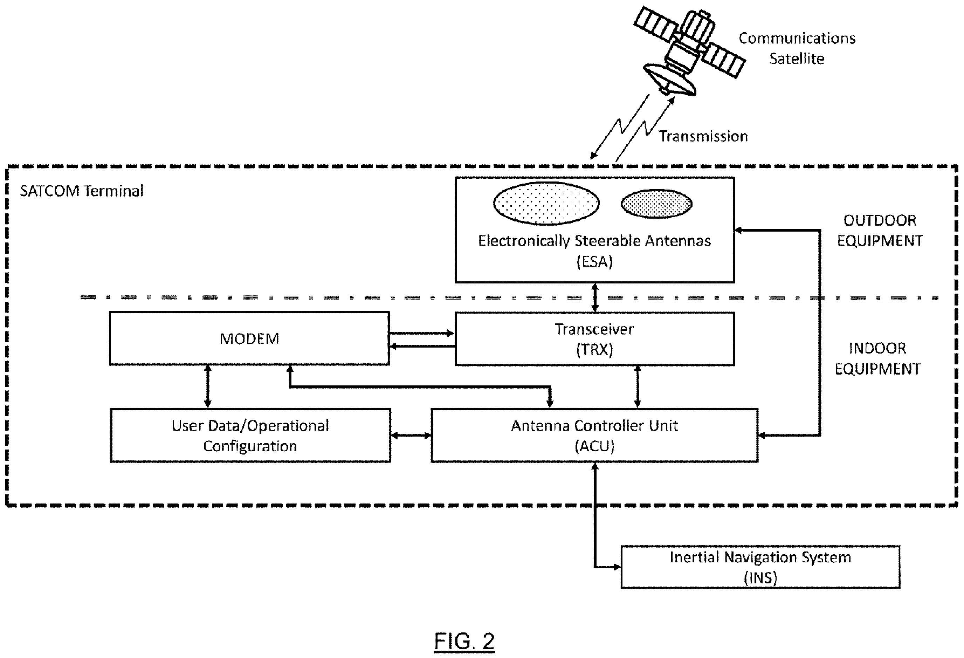

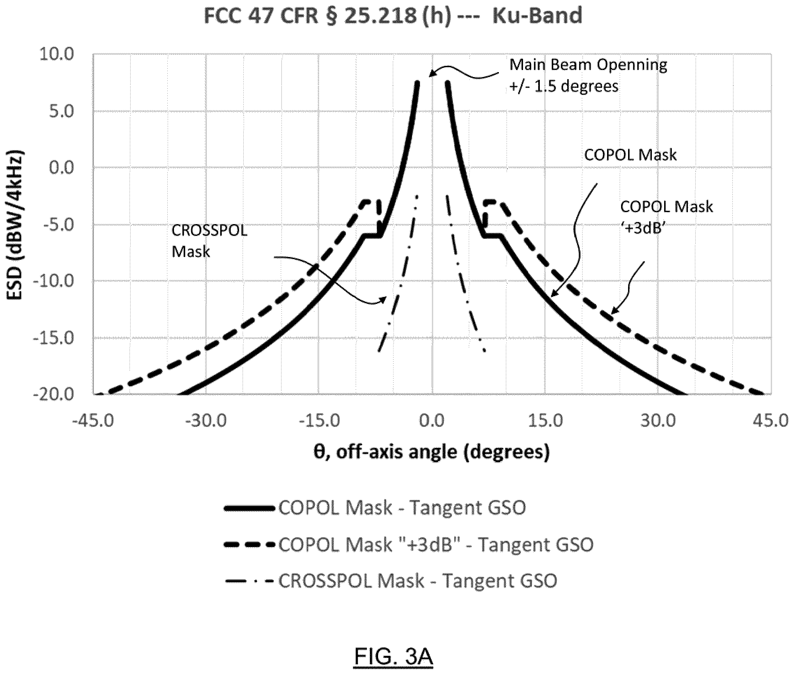

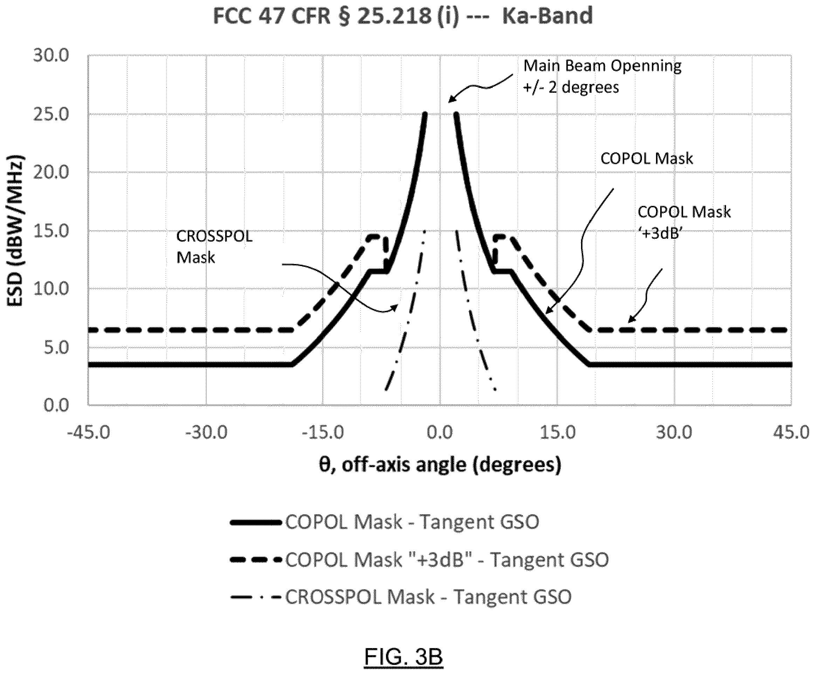

In a satellite communications scenario in which SATCOM (SATellite COMmunications) terminals (e.g. fixed devices arranged at a ground infrastructure, such as buildings, or mobile devices mounted aboard cars, boats, aircraft, etc.) establish a link with communications satellites, as described in Figure 1 and Figure 2, regulatory institutions like Federal Communications Commission (FCC) and satellite operators define off-axis EIRP spectral density (ESD) envelopes for the transmissions from SATCOM terminals, as illustrated in Figures 3A and 3B, to prevent harmful interference from earth stations to other satellites, especially to the satellites at geostationary orbit (GSO) arc, such as FCC according to 47 CFR § 25.218 "Off-axis EIRP density envelopes for FSS earth stations transmitting in certain frequency bands" and EUTELSAT EESS 502 "Earth Station Technical and Operational Requirements Standard M".

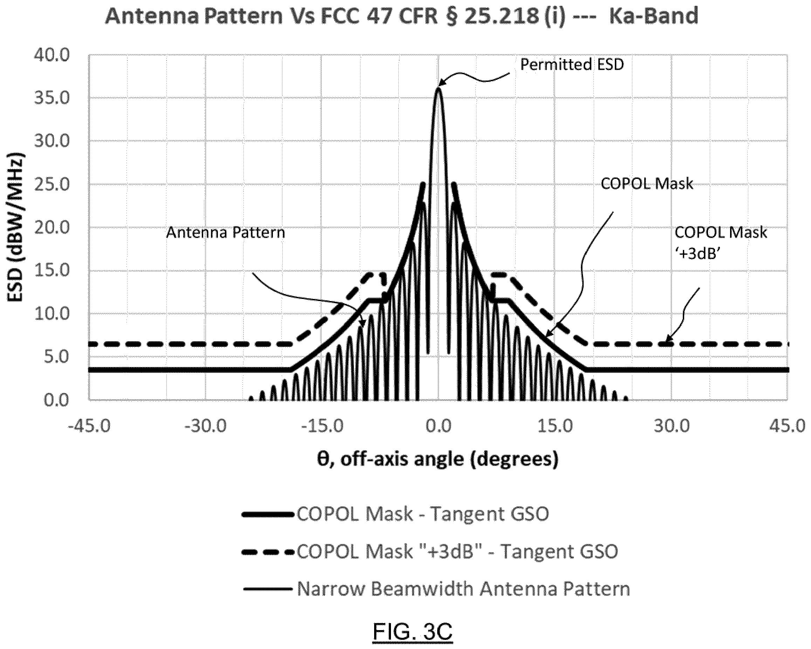

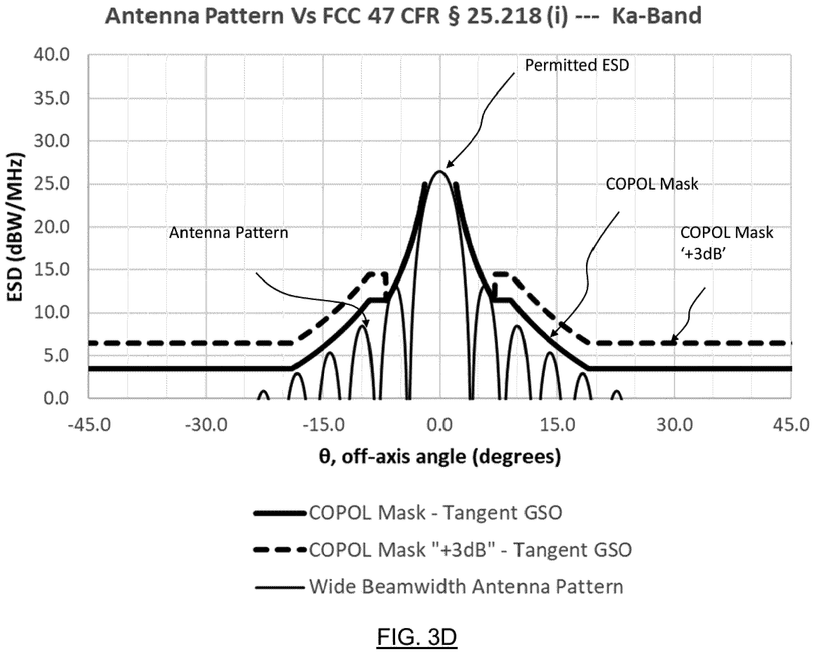

To be in compliance with the above-mentioned regulation, the antenna radiating pattern performance of SATCOM terminals is analysed (Figures 3C and 3D). Beamwidth and sidelobes are fundamental to establish the maximum allowed EIRP spectral density in a certain SATCOM terminal, operating scenario and service. On one hand, beamwidth must guarantee that adjacent satellites are not interfered with, while on the other hand low sidelobe level prevents interference with ground stations and other satellites located away from the terminal. The analysis is performed in nominal case and worst-case scenario, which corresponds to a certain combination of parameters, among others: satellite position/trajectory, antenna location/attitude (roll, pitch, yaw), antenna characteristics and frequency.

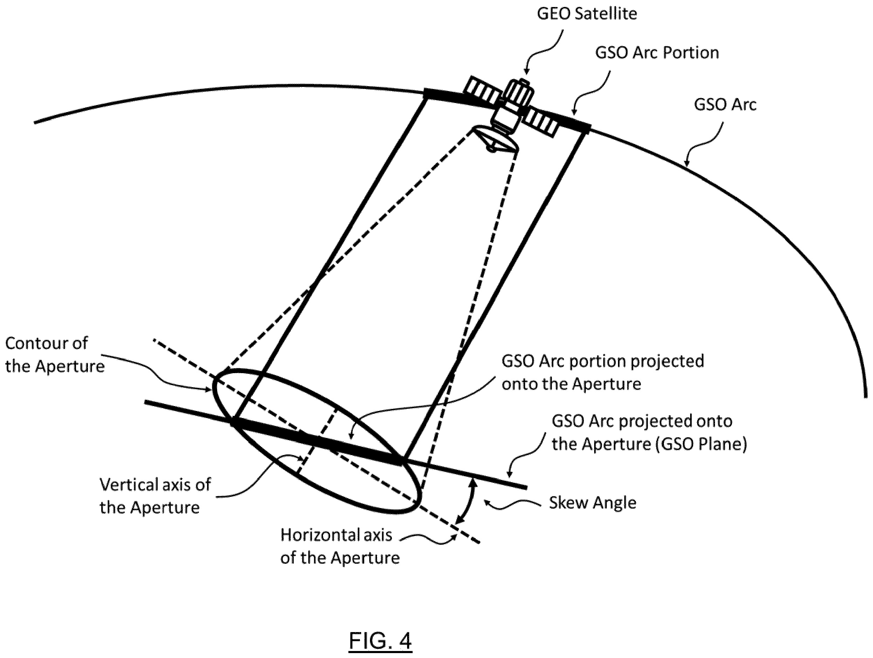

Typically, the nominal case applies to the largest equivalent electrical aperture in the tangent to the GSO arc. In contrast, the worst-case provides the smallest equivalent electrical aperture in the tangent to the GSO arc, which occurs at a certain skew angle, i.e. the angle between the horizontal axis (the longest axis) of the antenna aperture and the tangent to the geostationary arc corresponding to the satellite position projected onto the aperture plane (Figure 4Figure 4). The worst-case usually defines the maximum allowed EIRP spectral density (ESD) in the earth station.

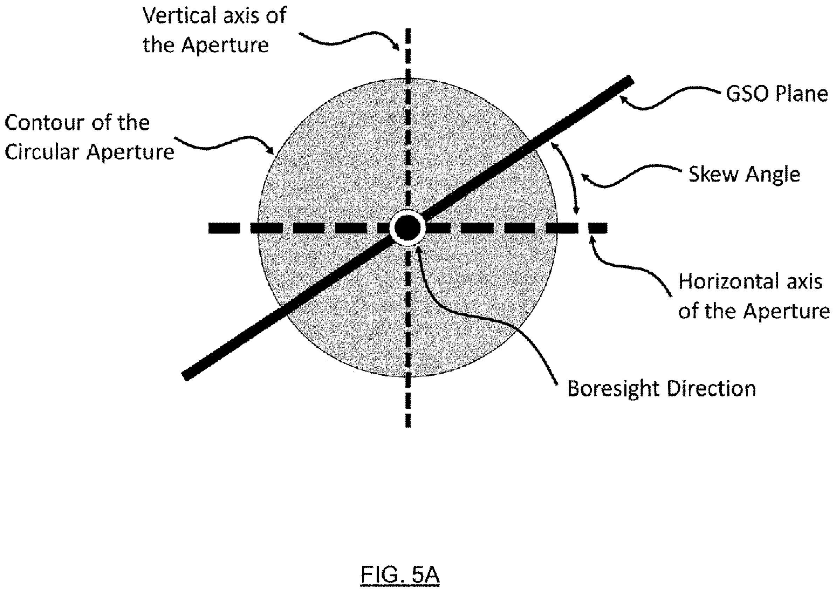

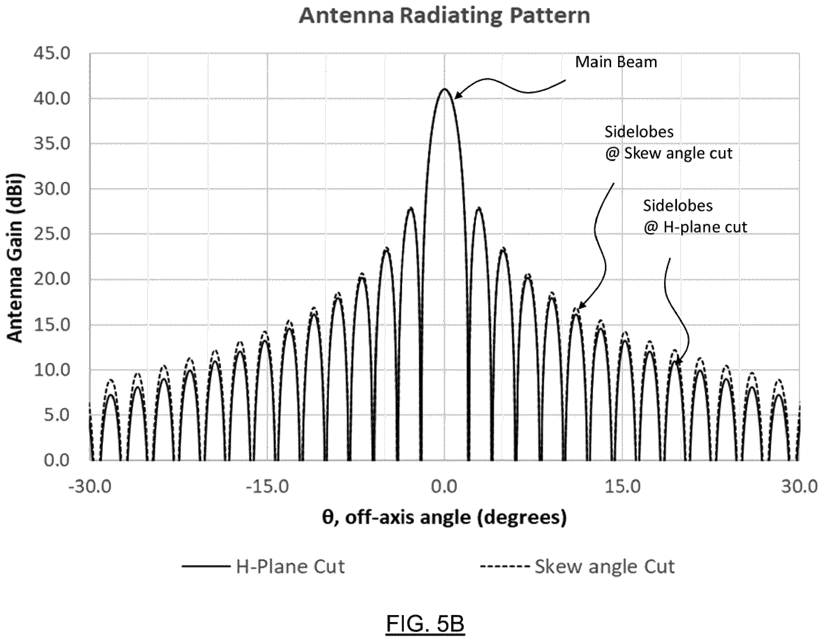

Generally, reflector antennas have been used as the main solution for ground fixed infrastructure for satellite communications in geostationary earth orbits. This type of antennas is based on a circular aperture, which is mechanically oriented in two axes (azimuth and elevation) to the satellite during the installation according to a particular site and satellite parameters. The same mechanical adjustment is used with circular apertures based on other technologies, among others, flat panel arrays whose radiating elements are waveguide, slotted waveguide, or patch antennas. All of them exhibit essentially very similar radiating patterns in all directions away from the centre of the beam, as depicted in Figures 5A and 5B. The effective electrical aperture keeps a very similar size throughout the steering angles to the satellite, and thus beamwidth and sidelobe level are not very different.

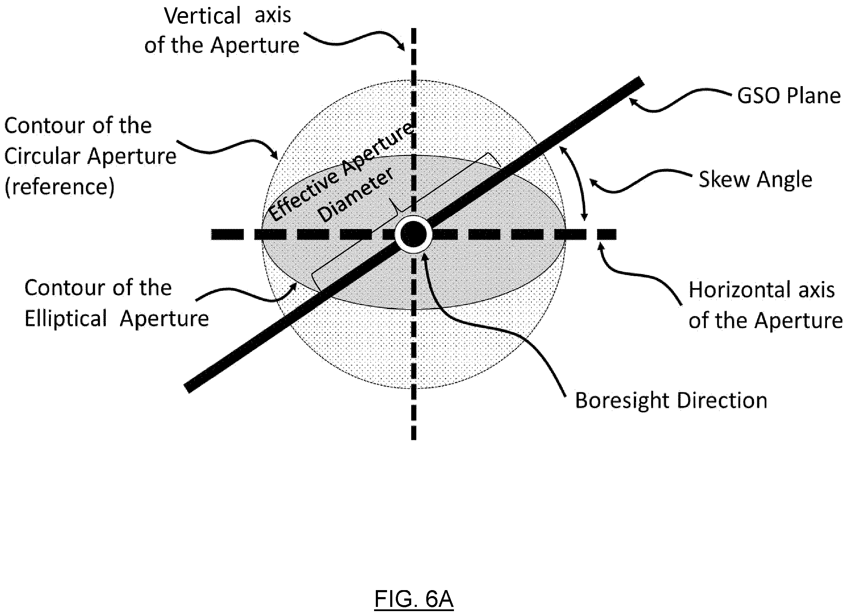

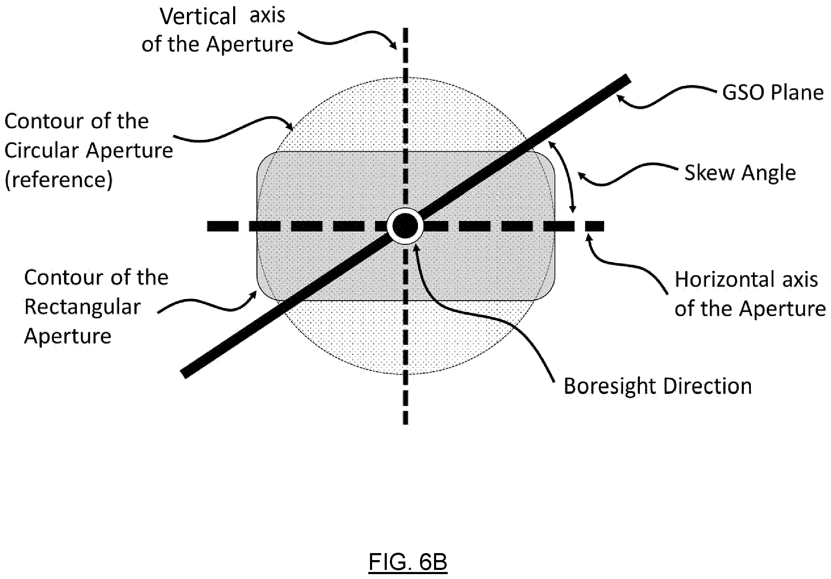

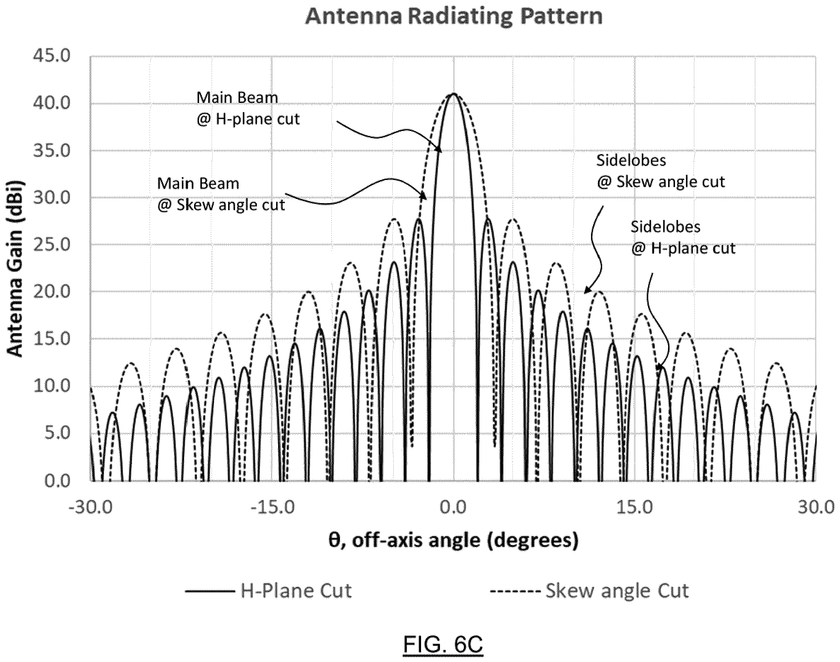

Other antenna solutions based on asymmetric apertures, for example elliptical or rectangular shapes, perform the best radiating pattern at the longest effective electrical aperture size while the worst characteristics occur are at the narrowest axis (Figures 6A and 6B). The larger asymmetry, the greater degradation in beamwidth and sidelobe level (Figure 6C). The maximum allowed EIRP will be defined by worst-case operating condition, where the skew angle leads to narrower effective aperture diameter (Figure 6A).

When the SATCOM terminal is installed in a fixed installation, this negative effect can be mitigated by rotating the aperture to compensate the skew angle and align the longest effective electrical aperture to the GSO arc. In geostationary earth orbit (GEO) systems for communications on-the-move (COTM), the SATCOM terminals are installed on mobile platforms (e.g. vehicles such as cars or airplanes) and continuously track the satellite. The motion of the SATCOM terminal, which follows the inertial system (pitch, roll, yaw) of the mobile platform with reference to the satellite orbital position, introduces skew angle variations. The same happens with systems based on low/medium earth orbits (LEO/MEO) satellites (Figure 1). Either earth stations in fixed locations or on mobile platforms, SATCOM terminals and satellites are in relative motion and continuous tracking to maintain the connectivity is required. SATCOM terminals for this kind of applications are, among others, based on stabilized platforms, like gimbaled systems with motorized reflectors or flat antenna panels, electro-mechanical flat antenna panels, metamaterials flat antenna panels, lens plus digital beamforming, and full electronic with flat antenna panels and IF/RF beamforming.

In certain scenarios, with no restriction in antenna size and land, motorized circular reflectors are used without impacting the EIRP capability due to radiating pattern. Other scenarios require several earth stations tracking multiple satellites together in the same location with limited plot for antenna installation. Then, the analysis of the different solutions delivers a trade-off in a specific location or service.

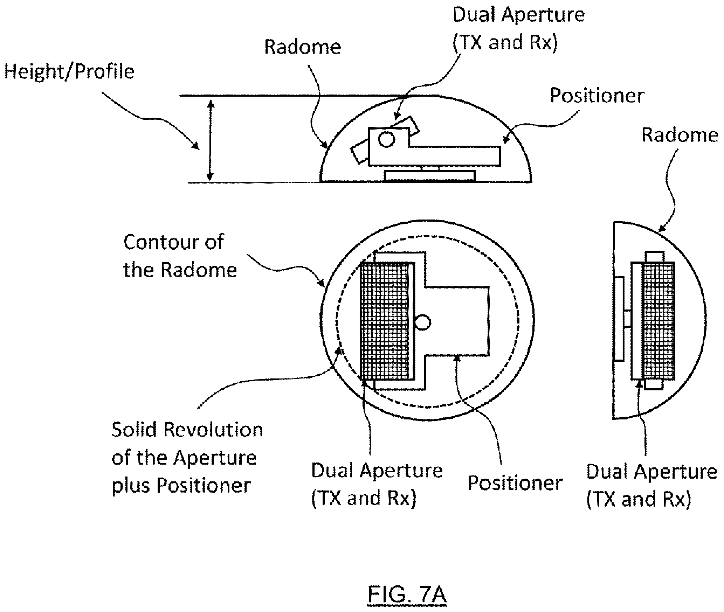

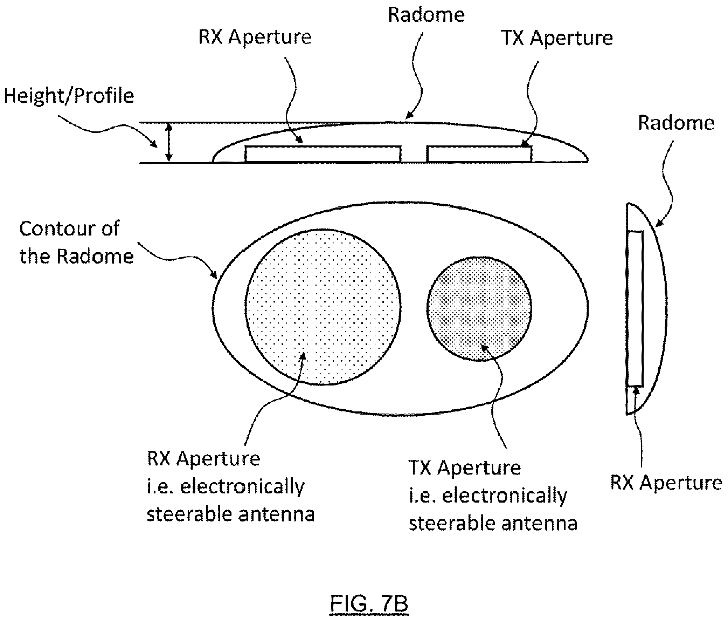

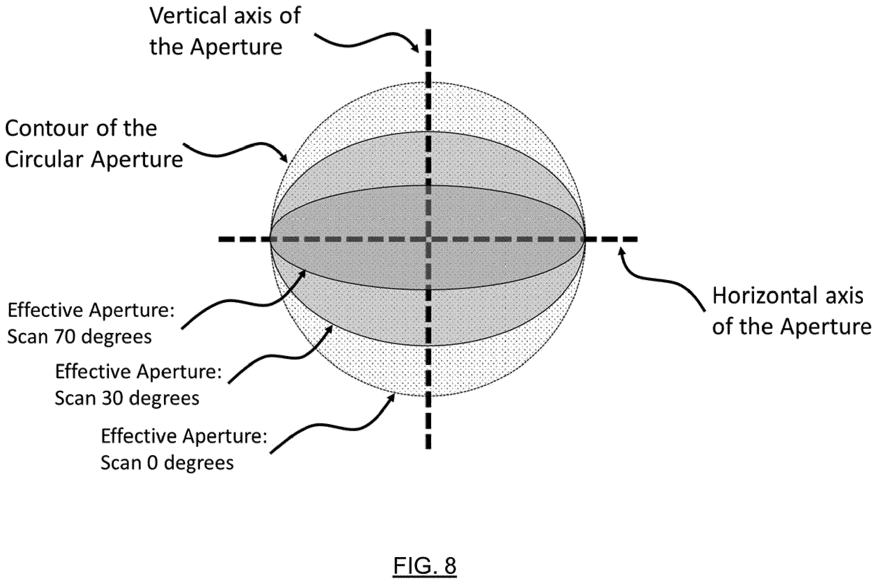

However, considering the low profile required for on-the-move solutions, asymmetric apertures with moving parts and planar phased array steerable antennas are more common than circular reflectors. In the first case, the asymmetric aperture is caused by the physical construction of the antenna, which is elliptical or rectangular shape, and the steering is based on electromechanical motion (Figure 7A). In the second case (Figure 7B), planar phased array steerable antennas can have circular shape when looked at boresight direction (typically pointing to zenith, 90 degree elevation angle), but when the antenna is pointing away from the zenith (low elevation angles), the circular aperture is transformed into an elliptical effective aperture (Figure 8). This causes two consequences: a smaller effective area (this is, lower gain) and asymmetric effective aperture in function of the elevation angle (a 0° scan angle of the antenna, depicted in Figure 8, corresponds to a 90° elevation angle of the satellite with regard to the antenna).

Because of the asymmetry, skew angle variation brings a degradation in radiating pattern (beamwidth and sidelobe level) that affects to the maximum allowed EIRP spectral density. Three main mitigations are suggested by technical literature and satellite operators:

(i) Physical aperture rotation to compensate for the skew angle effect.
(ii) Reduction of operating EIRP spectral density to prevent interference.
(iii) Cessation of emission when severe interference can be caused.

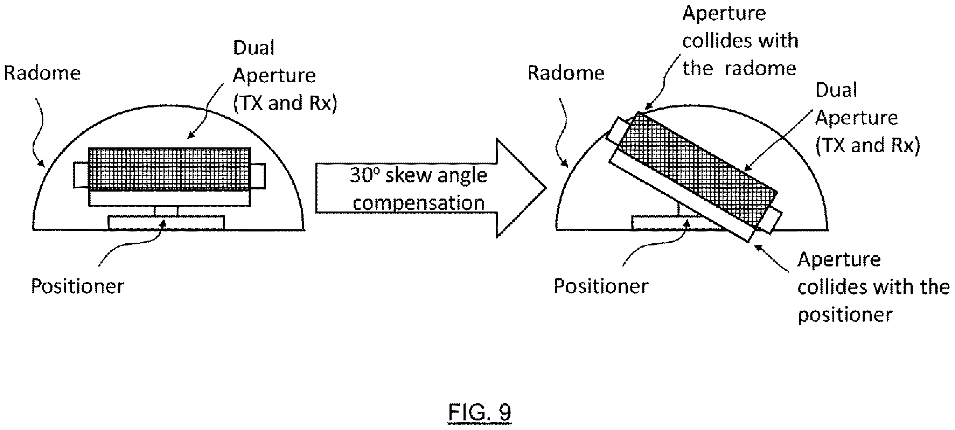

The physical rotation of the aperture is typically used in gimbaled systems. However, it causes a significant increase on the antenna profile that COTM earth stations cannot accept due to high constrains (Figure 9) antenna colliding with the radome and/or the positioner when rotated to minimize the effect of the skew angle). EIRP spectral density reduction adapts the operating level to the actual conditions to avoid interference by lowering the EIRP or modifying the bandwidth, therefore, reducing the link capacity of the satellite communications.

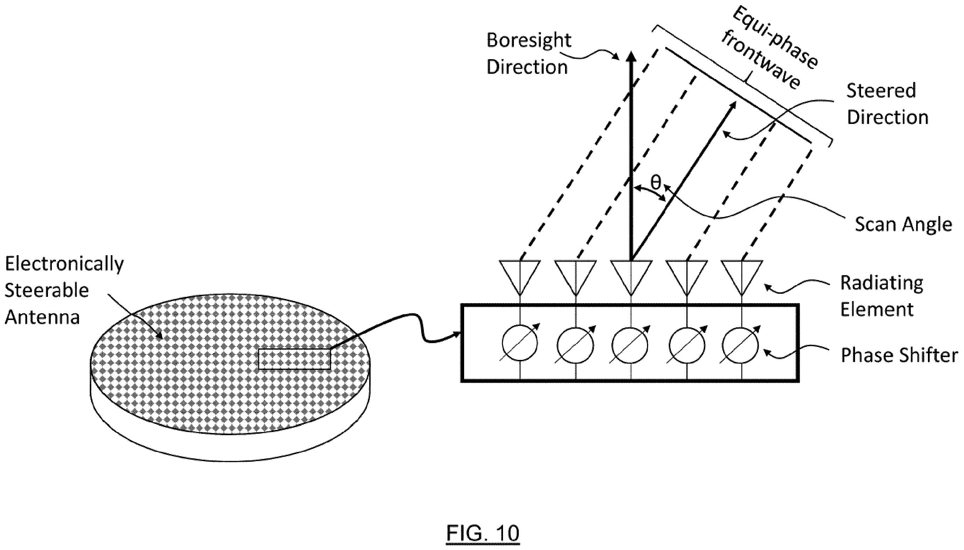

Planar phase arrays with wide steering range, typically 360° in azimuth and 0° to 80° scan angle (90° to 10° in elevation), that are based on electronically steered antennas (ESA) without moving parts, are presented as a suitable approach for low profile earth stations, especially on mobile platforms (land, maritime and airborne) and in LEO/MEO scenarios. In fact, they are presented as a disruptive technology for in-flight communications and entertainment applications where very low profile/drag terminals are required. ARINC-792 industry standard defines the main guidelines for the implementation of this kind on antennas in airborne scenarios, where consumption and dissipation of the large number of active components are identified as critical points in addition to the size constrains. The typical implementation of fully electronic approach based on active components, like RF beamformers, is presented in Figure 10. With this technology, antenna gain and radiating pattern are function of the steering angle, since effective aperture area is reduced in low elevation angles and radiating pattern is degraded (wider beamwidth and higher sidelobe levels). Generally, the objective on ESA systems is to reduce the physical aperture of the antenna as much as possible to control antenna performance, reduce consumption and dissipation, and to achieve a right trade-off. However, it is usual to define a minimum EIRP requirement for all the field of view of the system. Then, if the design is led on worst-case because of scan effect and skew angle degradation, as mentioned above, the system would be oversized at boresight.

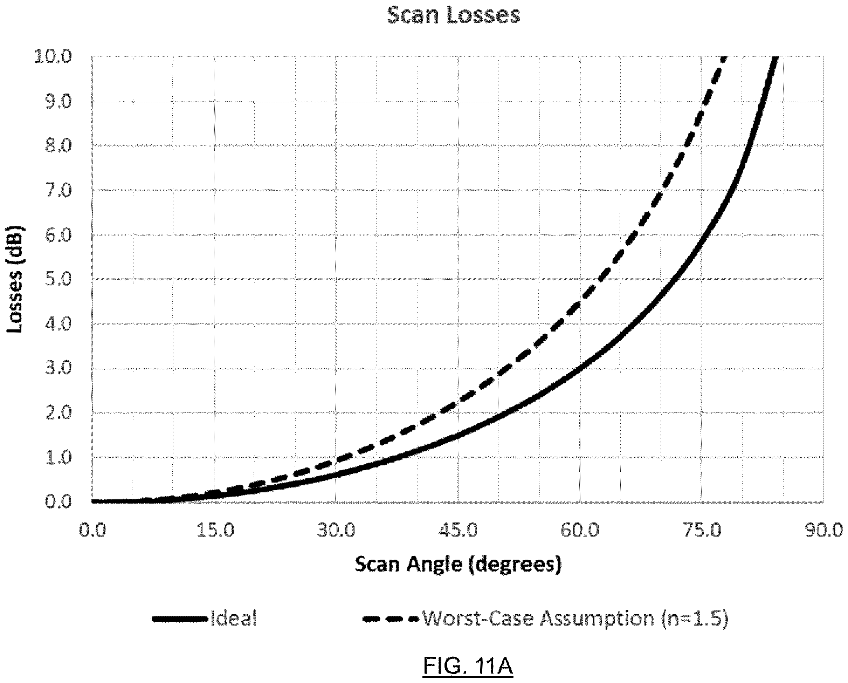

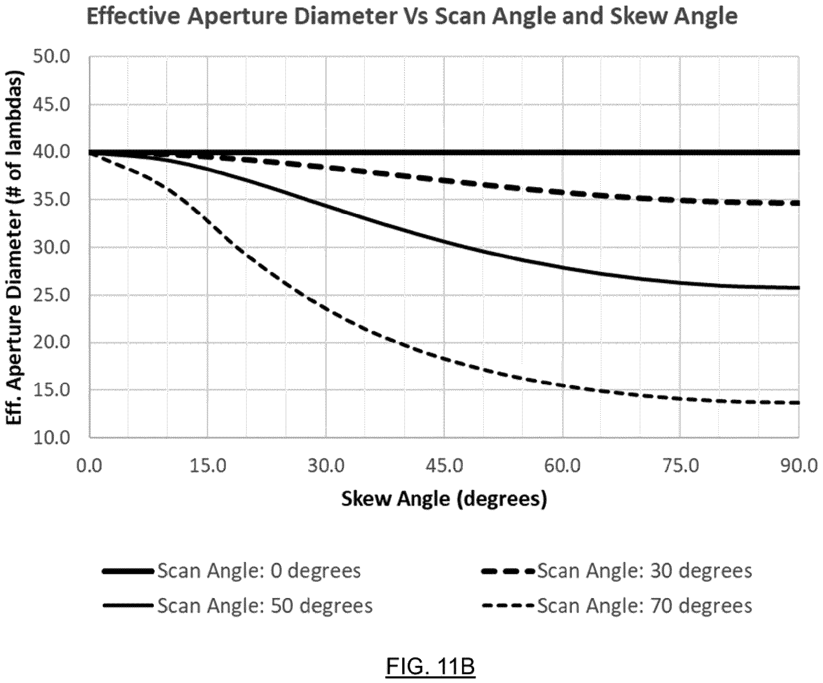

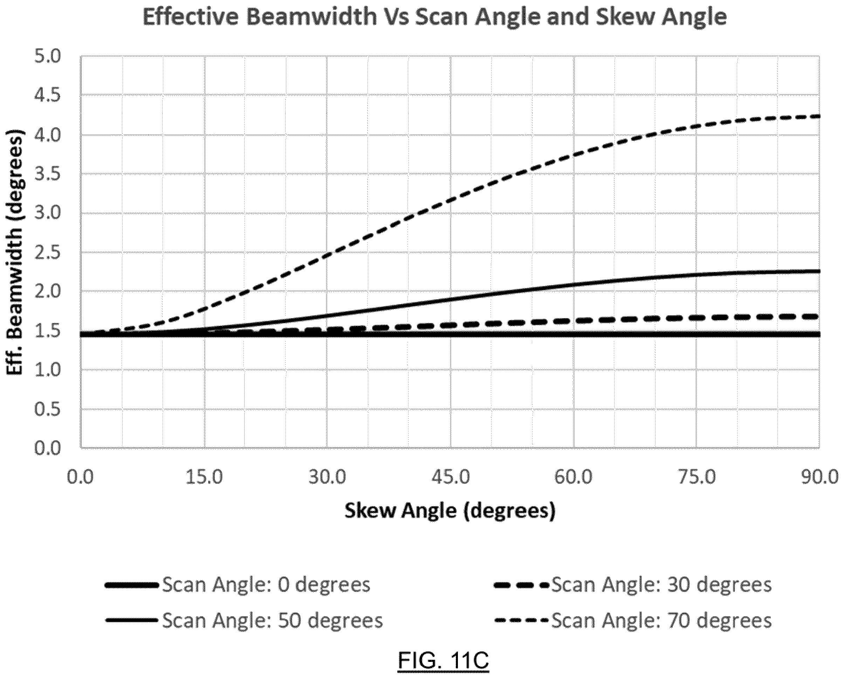

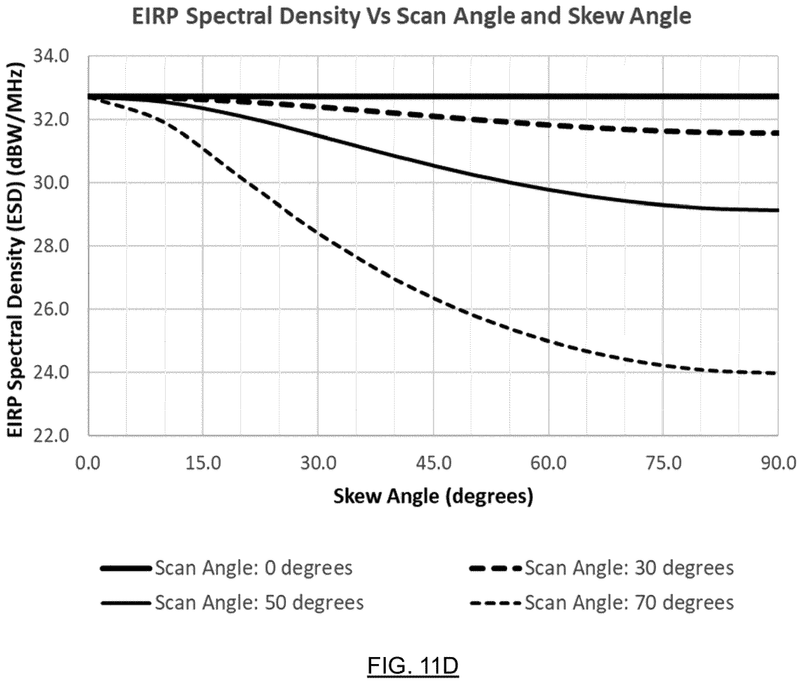

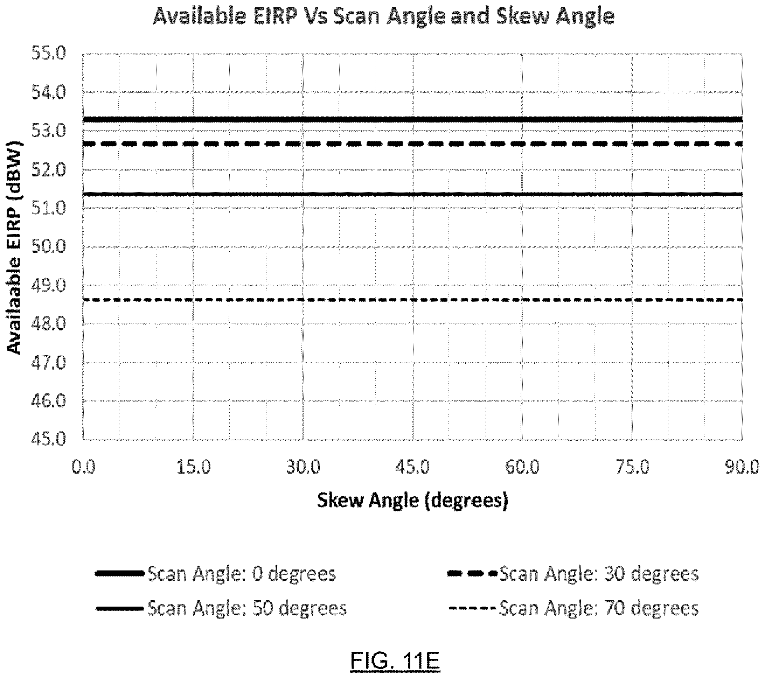

Figures 11A-11E show an example of antenna gain losses (Figure 11A), effective aperture diameter (Figure 11B), beamwidth (Figure 11C), ESD limit (Figure 11D) and EIRP available (Figure 11E) versus scan angle and skew angle for a fixed size aperture. The scan losses associated to a phase array are theoretically obtained by applying the scan angle factor to the boresight aperture, this is, multiplying by the cosine of the scan angle (by $\cos(\theta)$). However, a worst case scenario shown in Figure 11A, assuming a scan angle factor based on $(\cos(\theta))^n$ with n=1.5 (typically $1 \leq n \leq 2$), is more realistic due to the coupling between radiating elements in the array and due to the beam pattern of the radiating element itself. The effective aperture diameter depicted in Figure 11B is a function of scan angle and skew angle, and is affected importantly for some combinations of skew angle and scan angle. This is critical especially when considering dynamic systems, as phase arrays on-the-move or tracking LEO/MEO satellites. Consequently, the reduction of the effective aperture diameter means, on one hand, an increase in the beamwidth with a non-linear relationship (Figure 11C), as well as higher sidelobe level. On the other hand, the EIRP spectral density (ESD) is limited to prevent interference (Figure 11D). ESD is a critical parameter in any communication system. The higher the permitted ESD, the higher the bandwidth that can be used in the link while keeping the same signal to noise ratio. Figure 11E presents the effect of the scan angle in the available EIRP. Because of the reduction in gain, the available EIRP will be decreased accordingly, without dependency to skew angle.

There are various patent documents that disclose systems, methods and techniques to adapt dynamically the EIRP to the operating scenario, such as US10,320,471-B1, US11,145,976-B2 and US10,277,308-B1. Following these approaches, the operating EIRP in a fixed size aperture under certain combination of scan angle and skew angle is adapted to meet regulation by computing the interference level, by compensating the gain losses, or by adjusting ESD. These approaches are intended to mitigate the impact on other satellite systems and to achieve the maximized performance in the operating condition, which is limited by the fixed geometry of the aperture. However, no aperture modification or optimization is done in any of those techniques.

Patent documents US2017358851-A1 and US2021234270-A1 refer to system and methods for use with electronically steerable antennas for wireless communications.

The present invention proposes a different approach that solves the aforementioned problems.

**SUMMARY**

The present invention refers to an antenna system for a satellite communications device. The antenna system comprises a smart aperture electronically steerable antenna and a smart aperture antenna controller unit. The antenna comprises a plurality of radiating elements that are selectively activated. The radiating elements are arranged along an inner nominal region and an extended region, outer to the inner nominal region, of the smart aperture electronically steerable antenna. The controller unit is configured to obtain a scan angle (or a corresponding elevation angle) and a skew angle relative to a communications satellite; determine an antenna activation pattern including the radiating elements that are selectively activated to form an active aperture; and control the smart aperture electronically steerable antenna according to the antenna activation pattern. The antenna activation pattern is based at least on the scan (or elevation) angle and the skew angle. To determine the antenna activation pattern, the smart aperture antenna controller unit is configured to select a mode of operation from at least a nominal aperture mode of operation, in which only a plurality of radiating elements of the inner nominal region are selectively activated, and an extended aperture mode of operation, in which a plurality of radiating elements of both the inner nominal region and the extended region are selectively activated. The smart aperture antenna controller unit is further configured to determine the antenna activation pattern for the selected mode of operation.

Current antenna systems seek to adapt the EIRP spectral density to the operating scenario (according to the scan and skew angle), taking into account the characteristics of the antenna and the regulations. In certain combinations of scan angle and skew angle, satellite regulation to prevent interference with other satellites imposes a decrease in the emitted power. As a result, there is typically an important decrease in EIRP to avoid exceeding the maximum output power to comply with the off-axis regulation, and in no case an improvement in either the EIRP or the link efficiency is achieved. In the present invention the aperture of the antenna is reconfigured so that there is a lower limitation that allows offering greater EIRP and greater link efficiency.

The proposed antenna system dynamically optimizes the aperture and radiating pattern vs off-axis regulation in phase array antennas based on the computation of operating parameters (satellite position/trajectory, antenna location/attitude -heading, pitch, roll, yaw-, antenna characteristics, bitrate and frequency), such that the transmitted effective isotropic radiated power (EIRP) spectral density (ESD) can be maximized at worst-cases in scan and skew angles combination to meet the regulatory and to achieve higher bitrates and quality of service. The active aperture can be reconfigured to an optimal shape while consumption and dissipation are not impacted.

According to another aspect of the present invention, there is provided a computer-implemented method for operating an antenna system of a satellite communications device, the antenna system comprising a smart aperture electronically steerable antenna including a plurality of selectively activable radiating elements. The radiating elements are arranged along an inner nominal region and an extended region, outer to the inner nominal region, of the smart aperture electronically steerable antenna. The method comprises the following steps:

-    Obtaining a scan (or elevation) angle and a skew angle relative to a communications satellite.

-    Determining an antenna activation pattern including the radiating elements that are selectively activated to form an active aperture, wherein the antenna activation pattern is based at least on the scan (or elevation) angle and the skew angle. Determining the antenna activation pattern comprises:

     ◦ selecting a mode of operation from at least a nominal aperture mode of operation, in which only a plurality of radiating elements of the inner nominal region are selectively activated, and an extended aperture mode of operation, in which a plurality of radiating elements of both the inner nominal region and the extended region are selectively activated; and

     ◦ determining the antenna activation pattern for the selected mode of operation.

-    Controlling the smart aperture electronically steerable antenna according to the antenna activation pattern.

Another aspect of the present invention refers to a computer program product for operating an antenna system of a satellite communications device, the computer program product comprising instructions which, when the program is executed on a processor, cause the processor to carry out the computer-implemented method. The present invention also refers to a computer-readable storage medium having recorded thereon instructions to cause a processor to carry out the computer-implemented method.

The present invention may provide, at least, the following advantages:

- Achieve better characteristics of the radiation pattern of the SATCOM antenna compared to the ESD regulation, without affecting the consumption or the total dissipation of the terminal by using an active aperture size equal or slightly larger than the nominal size and dynamic optimization of the active aperture (shape/size/orientation) based on the combination of scan and skew angles.
- Achieve an increase in the emitted power spectral density (EIRP Spectral Density, ESD) in high scan angle conditions and adapted to the skew angle. This allows an increase in EIRP, therefore greater capacity in the link that is reflected in higher bitrate.
- Achieve an increase in link efficiency in bitrate/bandwidth occupied, which provides a reduction in the operating costs of the satellite service.

## BRIEF DESCRIPTION OF THE DRAWINGS

These and other features and advantages of the various embodiments disclosed herein will be better understood with respect the following description and drawings, in which like numbers refer to like parts throughout, and in which:

Figure 1 depicts a heterogenous satellite communication system with geostationary earth orbit (GEO) and low/medium earth orbit (LEO/MEO) constellations and different types of earth stations, among others, fixed, land mobile, maritime and airborne.

Figure 2 is a diagram illustrating a satellite communication earth station according to the prior art.

Figures 3A and 3B depict a graph illustrating off-axis EIRP Spectral density for digital earth station operation in the extended Ku-band (Figure 3A) and Ka-band (Figure 3B) according to FCC 25.218 (h), showing co-polarized transmission in the plane tangent to the GSO arc and cross-polarized transmissions in the plane tangent to the GSO. Figures 3C-3D depict a graph illustrating antenna pattern versus off-axis EIRP Spectral density for digital earth station operation in the conventional Ka-band according to FCC 25.218 (i), showing co-polarized transmission in the plane tangent to the GSO arc, using as an example narrow beamwidth and low sidelobes antenna pattern (Figure 3C) and wide beamwidth and medium sidelobes antenna pattern (Figure 3D).

Figure 4 illustrates a definition of skew angle, obtained as the angular distance between the antenna horizontal plane (the longest axis) and the tangent to the geostationary arc corresponding to the satellite position.

Figure 5A is an illustration of a circular aperture of an antenna, showing the horizontal plane and the GSO plane at an arbitrary skew angle. Figure 5B is a graph plotting antenna patterns of a circular aperture in the horizontal plane and in the GSO plane at an arbitrary skew angle.

Figures 6A and 6B depict an illustration of an asymmetric apertures (elliptical and rectangular shape, respectively), showing the horizontal plane and the GSO plane at an arbitrary skew angle. Figure 6C is a graph plotting antenna patterns of an asymmetric aperture in horizontal plane and in the GSO plane at an arbitrary skew angle.

Figures 7A and 7B depict a front, top and lateral view of a physically steerable antenna of a SATCOM terminal that illustrates the constrains in land mobile COTM applications (Figure 7A) and in airborne COTM applications (Figure 7B). in airborne COTM applications.

Figure 8 depicts a circular aperture in planar phase array to illustrate the effective aperture area versus scan angles 0°, 30° and 70°.

Figure 9 illustrates the impact in profile when COTM terminals uses skew angle compensation by aperture rotation.

Figure 10 illustrates an electronically steerable antenna, formed by a plurality of radiating elements and phase shifters.

Figure 11A is a graph plotting the antenna gain losses versus scan angle for a fixed size aperture in an ideal and worst-case scenario. Figures 11B-11E respectively represent a graph plotting, for different combinations of scan and skew angles and for a fixed size aperture, the effective aperture diameter, the antenna beamwidth, the antenna ESD, and the antenna available EIRP.

Figure 12 depicts an antenna system for satellite communications according to an embodiment of the present invention.

Figure 13 represents, according to an embodiment of the present invention, a flowchart of a method for operating an antenna system of a satellite communications device.

Figure 14 illustrates a process to determine the antenna activation pattern according to an embodiment.

Figures 15A and 15B depict different embodiments of the inner nominal region and outer extended region of the smart aperture electronically steerable antenna.

Figure 16 shows a process to determine the antenna activation pattern based on a selected mode of operation (nominal aperture mode of operation or extended aperture mode of operation).

Figure 17 depicts an embodiment of a satellite communications device that integrates an antenna system proposed in the present disclosure.

Figure 18 shows the components of a smart aperture antenna controller unit according to an embodiment of the present invention.

Figure 19 is a block diagram showing input and output variables of the smart aperture antenna controller unit according to an embodiment of the present disclosure.

Figure 20 shows, according to an embodiment, a processing of input variables performed by the smart aperture antenna controller unit to determine whether an active aperture needs updating.

Figure 21 is block diagram showing the flowchart of a method for reconfiguring the active aperture to improve the permitted ESD in accordance to the embodiment of the present disclosure.

Figure 22A and 22B show the smart aperture electronically steerable antenna working in a nominal aperture mode of operation.

Figures 23A and 23B show the smart aperture electronically steerable antenna working in an extended aperture mode of operation.

Figures 24A, 24B and 24C show a comparison of aperture size, area and number of elements in different configuration, scan angle, skew angle and aperture rotation.

Figure 25 shows the optimal aperture rotation ($\delta$) obtained as a function of the combination of scan angle and skew angle.

Figure 26 shows the potential benefit in EIRP Spectral Density (ESD) and in bitrate as a function of the oversize factor.

Figure 27 shows the potential benefit in spectral efficiency as a function of the oversize factor.

## DETAILED DESCRIPTION

The present invention refers to an antenna system for a satellite communications device. The antenna system allows controlling the aperture of a phased array antenna in such a way that the EIRP Spectral Density (ESD) can be optimized dynamically when the scan angle and skew angle of the antenna changes. These variations are frequent in antenna systems mounted on mobile platforms (earth stations) in communication with geostationary satellites and, also, in antenna systems mounted on fixed or mobile platforms (earth stations) linked to low/medium earth orbits (LEO/MEO) satellites. According to the satellite and earth station parameters, especially the antenna characteristics throughout the scan range and the instantaneous skew angle, a certain ESD limit must be applied to the earth station to comply with the off-axis regulation. The present invention aims to improve the ESD limit, especially when the elevation angle and skew angle of the communications satellite lead to a scenario with great degradation in beamwidth and sidelobe level.

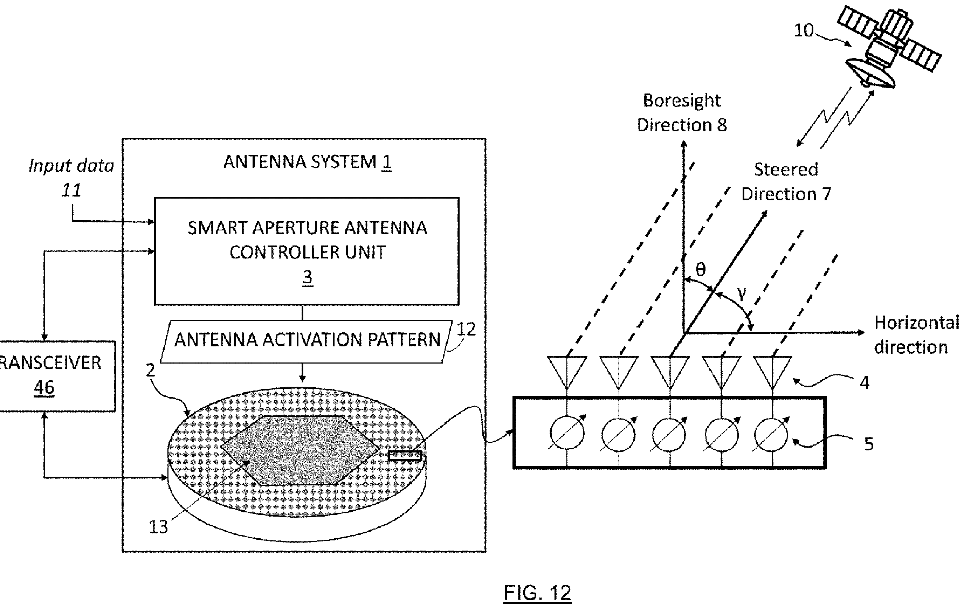

**Figure 12** depicts an antenna system 1 for satellite communications according to an embodiment of the present invention. The antenna system comprises a smart aperture electronically steerable antenna 2 and a smart aperture antenna controller unit 3.

The smart aperture electronically steerable antenna 2 is a phased array antenna comprising a plurality of radiating elements 4 which can be selectively activated, i.e. the radiating elements can be activated/energized or not, either individually or in small groups of radiating elements (for instance, a particular radiating element or group of radiating elements can be deactivated by disabling the input signal to be transmitted by the particular radiating element or group of radiating elements), according to a determined antenna activation pattern. In a phased array antenna the power from a transceiver 46 is fed to the radiating elements 4 through phase shifters 5, controlled by the antenna controller unit, which can alter the phase or signal delay electronically, thus steering the beam of radio waves to a different direction (steered direction 7, pointing towards a communications satellite 10 in Figure 12). The transceiver 46 may be a part of the antenna system 1 (e.g. a part of the antenna 2 itself) or, alternatively, an external element to the antenna system 1.

The smart aperture antenna controller unit 3 is configured to obtain a scan angle $\theta$ (or a corresponding elevation angle $\gamma$) and a skew angle $\Phi$ of the antenna relative to the communications satellite 10. The scan $\theta$ and skew $\Phi$ angles may be repeatedly or iteratively obtained over time. The scan angle $\theta$ of the antenna is the angle between the steered direction 7 and the boresight direction 8, which corresponds to a 90° elevation angle, so that $\theta=90°-\gamma$. The smart aperture antenna controller unit 3 receives input data 11. The scan angle $\theta$ and the skew angle $\Phi$ may be repeatedly (e.g. periodically) provided to the smart aperture antenna controller unit 3, as part of the input data 11. Alternatively, the smart aperture antenna controller unit 3 may be configured to repeatedly compute the scan angle $\theta$ and/or the skew angle $\Phi$ from data contained within the received input data 11, such as inertial navigation data of the earth station where the antenna system 1 is installed and data relative to the position/orbit of the communications satellite 10. The computation of the scan angle $\theta$ and skew angle $\Phi$ is well known in the prior art and may be performed according to any known method.

The smart aperture antenna controller unit 3 is further configured to determine an antenna activation pattern 12 defining the radiating elements 4 that are selectively activated to form an active aperture 13, the antenna activation pattern 12 being obtained using the scan angle $\theta$ and the skew angle $\Phi$. The antenna activation pattern 12 may be repeatedly determined over time, considering the updated values of the scan $\theta$ and skew $\Phi$ angles that are continuously obtained. The smart aperture antenna controller unit 3 operates the smart aperture electronically steerable antenna 2 according to the antenna activation pattern 12 obtained in each iteration (if the process is repeatedly performed), selectively activating the radiating elements 4 to form a determined active aperture 13.

The shape of the active aperture 13 is preferably circular, elliptical or polygonal (e.g. hexagonal, as depicted in the example of Figure 12). The polygonal shapes are preferably regular, since regular shapes yield better antenna performance than active apertures 13 formed by irregular shapes. Since the antenna 2 is formed by a discrete number of radiating elements 4 (like pixels of a screen are also discrete), the shape 14 of the active aperture 13 may be not perfectly circular, elliptical or polygonal, but substantially circular, elliptical or polygonal. For instance, a circular shape of an active aperture 13 implies that the active aperture 13 is formed by all the radiating elements 4 contained within a substantially circular outline. Similarly, an elliptical shape and a polygonal shape of an active aperture 13 are respectively formed by the radiating elements 4 contained within a substantially elliptical contour and a substantially polygonal contour.

The iterations (when the process is repeatedly carried out) for obtaining the scan and skew angles, determining the antenna activation pattern 12 and applying the activation pattern on the antenna may for instance be executed periodically (e.g. every few seconds) or whenever a given change or circumstance arises, such as a certain change in the scan angle $\theta$ and/or the skew angle $\Phi$. With the dynamic and selective activation of the radiation elements according to the antenna activation pattern 12, the antenna system 1 can dynamically correct any degradation of the antenna performance.

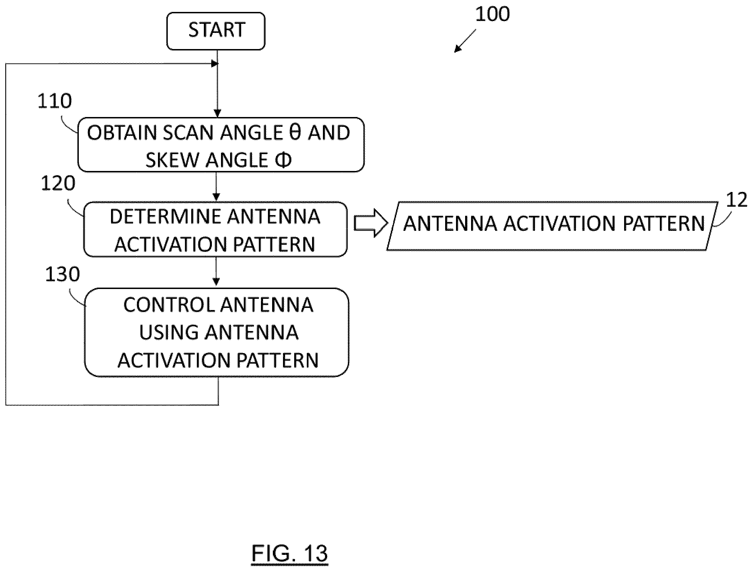

**Figure 13** represents a flowchart of a method 100 for operating an antenna system of a satellite communications device, wherein the antenna system comprises a smart aperture electronically steerable antenna 2 including a plurality of selectively activable radiating elements 4. The method comprises obtaining 110 a scan angle $\theta$ and a skew angle $\Phi$ relative to a communications satellite 10; determining 120 an antenna activation pattern 12 including the radiating elements 4 that are selectively activated to form an active aperture 13, wherein the antenna activation pattern 12 is based at least on the scan angle $\theta$ and the skew angle $\Phi$; and controlling 130 the smart aperture electronically steerable antenna 2 according to the antenna activation pattern 12. These steps (110, 120, 130) are preferably repeated over time, as shown in Figure 13; alternatively, the process may be executed once.

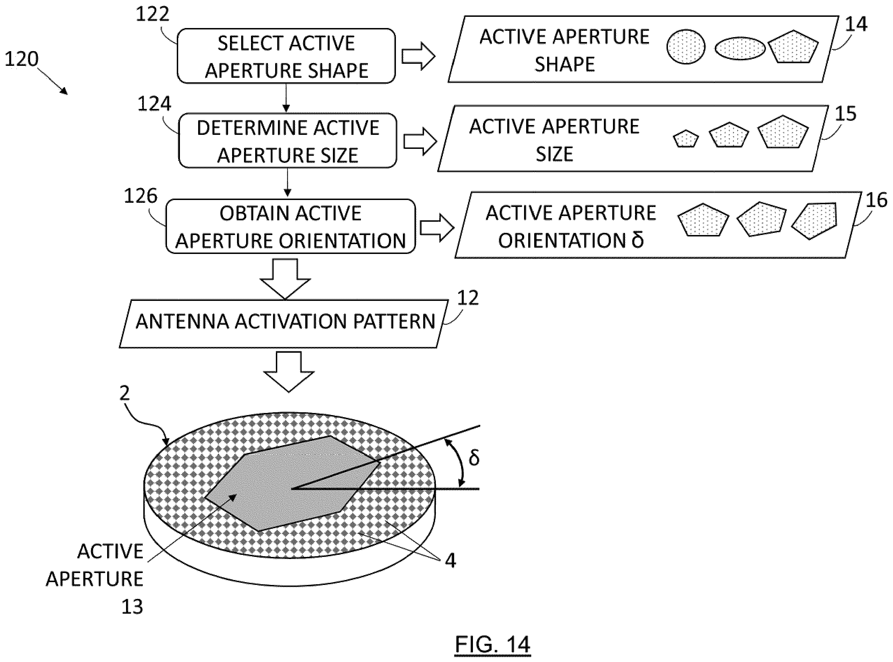

According to an embodiment, the smart aperture antenna controller unit 3 may determine 120 the antenna activation pattern 13 following the flow diagram depicted in **Figure 14,** by:

- Selecting 122 a shape 14 of the active aperture 13 defined by the antenna activation pattern 12. The active aperture shape 14 is preferably selected among the following shapes: circular shape, elliptical shape or polygonal shape.
- Determining 124 a size 15 of the active aperture 13 for the selected shape 14 based on a number of radiating elements 14 that are selectively activated.
- Obtain 126 an orientation 16 of the active aperture (aperture rotation angle $\delta$) such that a EIRP spectral density, ESD, emitted by the smart aperture electronically steerable antenna is improved (preferably maximized) in the scan angle $\theta$ and skew angle $\Phi$ for the selected shape 14 and size 15, when compared with the current ESD.

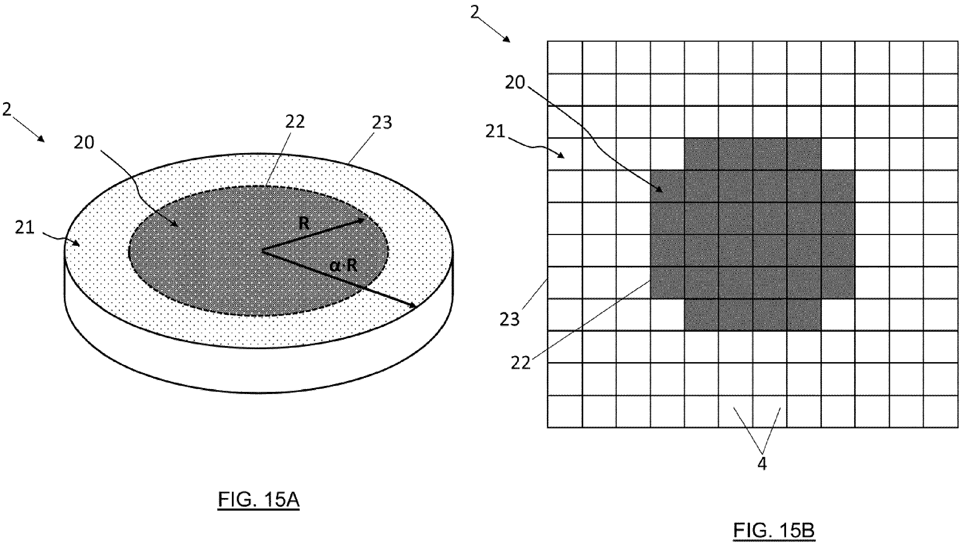

In an embodiment, the radiating elements 4 are arranged over an inner nominal region and an extended region, outer to the inner nominal region, of the smart aperture electronically steerable antenna 2. **Figure 15A** is an exemplary embodiment showing an inner nominal region 20 (highlighted in the figure) and an outer extended region 21. The inner nominal region 20 may be, for instance, circular (as shown in Figure 15A), elliptical or polygonal, although the inner nominal region 20 may adapt other different shapes, such as a square or rectangle without including radiating elements 4 at the corners, as depicted in **Figure 15B,** a top view of the smart aperture electronically steerable antenna 2 in which the inner nominal region 20 is highlighted.

The extended region 21 may also adapt different forms, such as an annular region shown in Figure 15A, defined between the circular inner nominal region 20 of radius R and a larger circle of radius $\alpha \cdot R$, with $\alpha$ being an oversize factor greater than 1. The outline 23 of the extended region 22 may be a polygon, e.g. a square (Figure 15B), an ellipse or other closed shapes, wherein the extended region 22 includes the radiating elements 4 arranged between the outline 23 of the extended region 22 and the outline 22 of the inner nominal region 20. The inner nominal region 20 includes the radiating elements 4 arranged within outline 22.

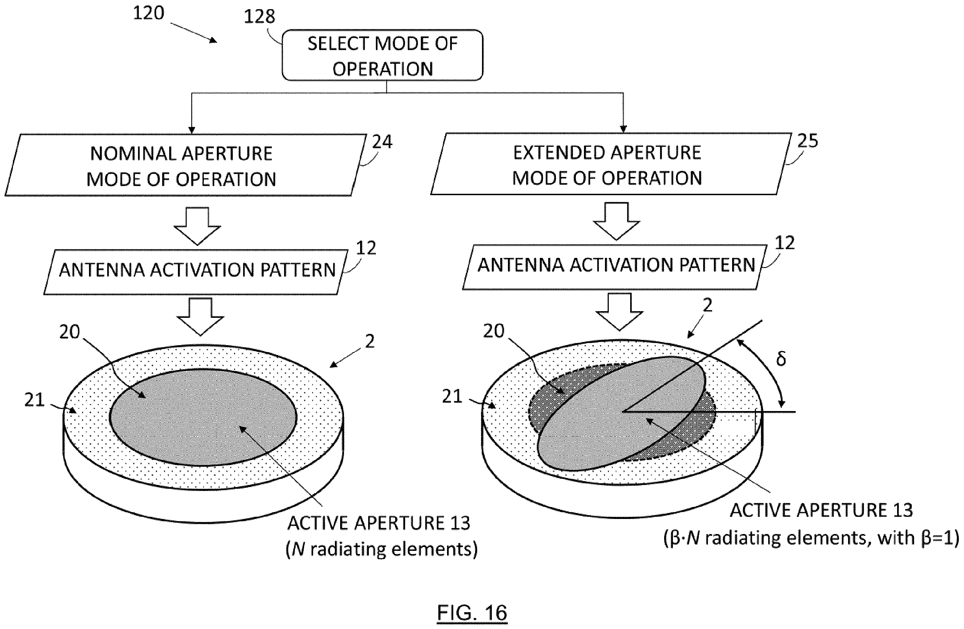

To determine 120 the antenna activation pattern 12 the smart aperture antenna controller unit 3 is configured to select 128 a mode of operation from at least a nominal aperture mode of operation 24 or an extended aperture mode of operation 25 (**Figure 16**). The antenna activation pattern 12 is then established for the selected mode of operation.

In the nominal aperture mode of operation 24 only radiating elements 4 of the inner nominal region 20 are selectively activated. In an embodiment, all the radiating elements 4 contained within the inner nominal region 20 are activated in the nominal aperture mode of operation 24 to form an active aperture 13, as shown in the example of Figure 16. However, in other embodiments only part of the radiating elements 4 within the inner nominal region 20 are selectively activated to form the active aperture 13 (i.e. some radiating elements 4 within the inner nominal region 20 remain deactivated). In the nominal aperture mode of operation 24 all the radiating elements within the extended region 21 are deactivated.

In the extended aperture mode of operation 25 a plurality of radiating elements 4 of both the inner nominal region 20 and the extended region 21 are selectively activated. The radiating elements 4 from each region (20,21) which are selectively activated may be determined, for instance, according to the process previously described in Figures 13 and 14. Using the radiating elements 4 of the extended region 21 in combination with radiating elements of the inner nominal region 20 may advantageously contribute to a better antenna performance.

In the example of Figure 16 the radiating elements 4 of the inner nominal region 20 and the extended region 21 that are selectively activated form an active aperture 13 with a certain shape (elliptical with a determined eccentricity), size (determined for instance by the length of the semi-major axis) and orientation (determined by the aperture rotation angle $\delta$). Preferably, the aperture rotation angle $\delta$ is selected such that a EIRP spectral density, ESD, emitted by the smart aperture electronically steerable antenna is improved (preferably maximized) in the scan angle $\theta$ and skew angle $\Phi$, when compared with the ESD of the current active aperture. The elliptical active aperture 13 with the size and orientation shown in the extended aperture mode of operation 25 of Figure 16 is obtained by using the extended region 21 (i.e. it cannot be obtained using only radiating elements 4 of the inner nominal region 20).

The number of radiating elements 4 selectively activated in the extended aperture mode of operation 25 can be defined as $\beta \cdot N$, with N being the number of radiating elements 4 of the inner nominal region 20 and $\beta$ a consumption factor. In the nominal aperture mode of operation 24 all the N radiating elements 4 of the inner nominal region 20 are preferably activated (example of Figure 16). The number of radiating elements 4 activated in the extended aperture mode of operation 25, $\beta \cdot N$, may be equal, greater or lower than N, depending on the value of the consumption factor $\beta$.

The value of the consumption factor $\beta$ may be configurable; for instance, the consumption factor $\beta$ can be dynamically adjusted during the iterations for determining 120 the antenna activation pattern 12. In the embodiment depicted in Figure 16, the consumption factor $\beta$ is set to 1, so that the same number of active elements N is maintained in both the nominal aperture mode of operation 24 and the extended aperture mode of operation 25 to avoid higher consumption or dissipation problems (the number N of radiating elements of the inner nominal region 20 preferably corresponds to the nominal consumption of the antenna when all these elements are activated).

The inner nominal region 20 and the extended region 21 are not necessarily two different pieces assembled together during the manufacturing process of the smart aperture electronically steerable antenna 2; instead, the antenna may be formed by one piece or surface comprising the radiating elements 4 uniformly distributed thereon, so that the regions (20,21) are logically considered by the smart aperture antenna controller unit 3 during the process execution. For instance, the smart aperture electronically steerable antenna 2 may be formed by a certain number P of radiating elements 4, wherein each one of them can be selectively activated or deactivated, and therefore can be individually identified. The radiating elements 4 forming each region (20, 21) may be, for instance, logically defined in a table stored on a memory. When selecting 128 a mode of operation and controlling the smart aperture electronically steerable antenna 2, the smart aperture antenna controller unit 3 may access the table storing said information.

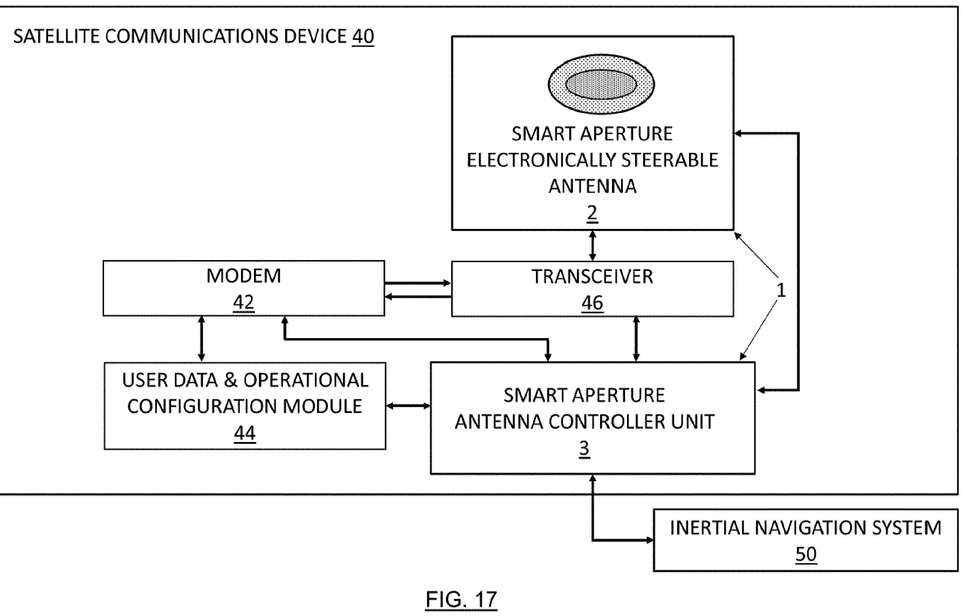

The antenna system 1 of the present invention is intended to be used in a satellite communications device. **Figure 17** shows an embodiment of a satellite communications device 40 that integrates the antenna system 1 previously described. The satellite communications device 40 further comprises:

- A modem 42, used to establish data exchange between emitter and receiver by the transformation of bitstreams to a radio signal and vice versa. Typically, modulation/demodulation functions, error correction codes and framing formats are implemented with different schemes, among others, Digital Video Broadcast by Satellite in available versions (DVB-S/-S2/S2X) or Digital Video Broadcast Return channel via Satellite in available versions (DVB-RCS/-RCS2)

- A user data and operational configuration module 44, that provides the basic and advanced configuration parameters for satellite service. It contains the interface for user and the associated parameters to enable and operate the system.

- A transceiver 46, in charge of signal conditioning and frequency conversion between the modem frequency range (typically in 70/140 MHz or in 950-2150 MHz) and the radiating frequency range (depending of the satellite system, for example Ku-band or K/Ka-band). Different approaches can be followed, including single and/or multiple frequency conversions in the radio path. Likewise, single radio path or multiple distributed radio paths.

The satellite communications device 40 may be connected to an inertial navigation system 50, which is physically attached to the satellite communications device 40 and provides navigation data thereof, such as the position, the orientation and the velocity of the device. The satellite communications device 40 may be a portable device or a device attached to a fixed location. In the latter case the inertial navigation system 50 would not be required since the position and orientation of the device remains invariable.

In the satellite communications device 40 the active elements throughout the aperture (radiating elements 4) can be selectively enabled/disabled to optimize the aperture shape and configuration to improve the overall performance of radiating patterns in worst-case combinations of scan angle $\theta$ and skew angle $\Phi$ versus off-axis regulation, achieving higher ESD in contrast to the fixed size active apertures of the prior art. This may be done based on the computation of operating and motion parameters (satellite position/trajectory, antenna location/attitude -heading, pitch, roll, yaw-, antenna characteristics, bitrate and frequency) and reconfiguring the active aperture to the optimal shape while consumption and dissipation are not impacted.

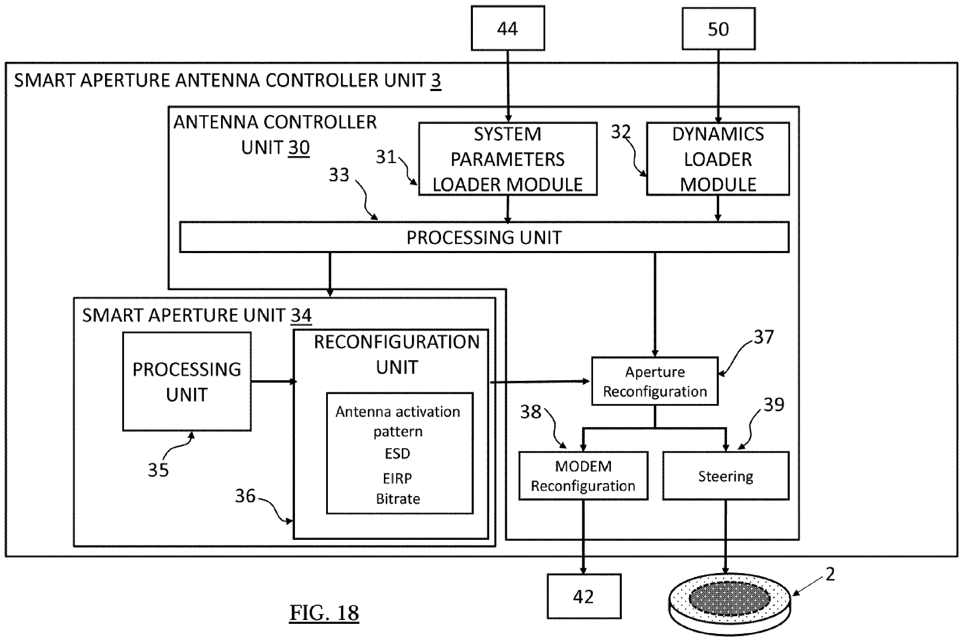

**Figure 18** shows the internal structure of a smart aperture antenna controller unit 3 according to an embodiment of the present invention. The smart aperture antenna controller unit 3 depicted in Figure 18 includes an antenna controller unit 30 and a smart aperture unit 34. The processing of the antenna controller unit 30 includes a coordinate change to obtain the steering angles and the application of the steering parameters to each of the active elements, according to standard algorithms involving mathematical formulas for changes of coordinates. The smart aperture antenna controller unit 3 of the present invention advantageously reconfigures the active aperture 13 depending on the operating conditions to achieve better performance. The smart aperture unit 34 computes the new steering and operating parameters, and further computes the aperture reconfiguration 37 including aperture size and shape, which are additional parameters that provide greater flexibility to the aperture configuration.

In the embodiment of Figure 18 the antenna controller unit 30 includes a system parameters loader module 31 that receives user and service data from the user data and operational configuration module 44, a dynamics loader module 32 that receives navigation data from the inertial navigation system 50, and a processing unit 33. The function of these modules is well known in the prior art. The smart aperture unit 34 includes a processing unit 35 and a reconfiguration unit 36 which calculates an aperture reconfiguration 37 and the new steering and operating parameters of the antenna, including ESD, EIRP and bitrate.

However, the smart aperture antenna controller unit 3 is not necessarily implemented as depicted in Figure 18 with two individual units 30 and 34. For instance, the smart aperture antenna controller unit 3 may be considered as an individual antenna controller (instead of two separate units 30 and 34, with separate processing units 33 and 35) having a processing unit configured to process the input data 11 to obtain the steering and operating parameters, and the aperture reconfiguration 37 including the antenna activation pattern with the active aperture matrix. If the parameters of the modem 42 need changing (for instance, due to a change of the bitrate), the smart aperture antenna controller unit 3 sends a modem reconfiguration 38 including configuration parameters to the modem 42. The new calculated steering 39 is also applied to the smart aperture electronically steerable antenna (2), along with the antenna activation pattern 12 or active aperture configuration.

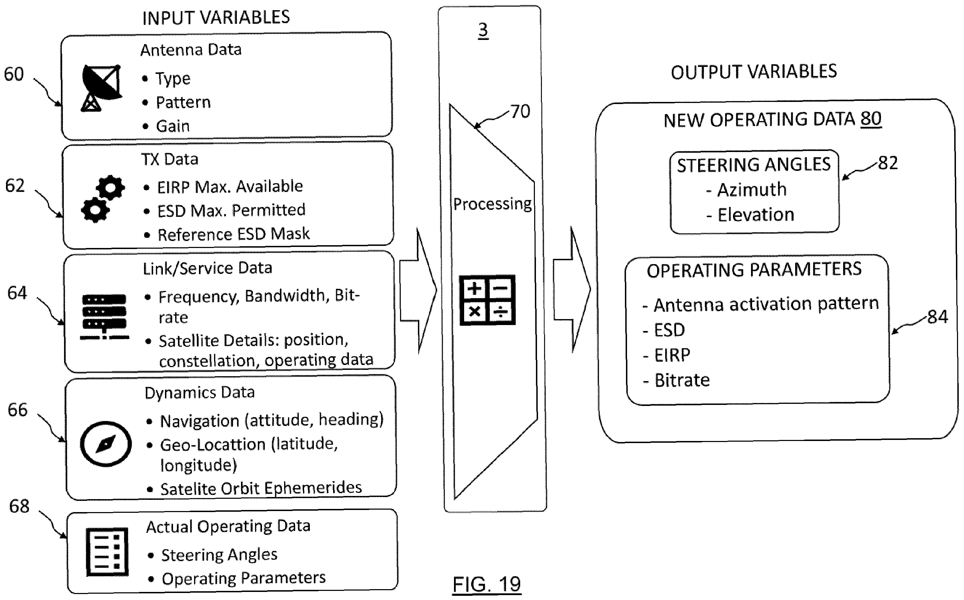

**Figure 19** is a block diagram showing input and output variables of the smart aperture antenna controller unit 3 according to an embodiment of the present disclosure. The smart aperture antenna controller unit 3 uses the current service, motion and operating parameters to calculate the operating parameters in each new iteration. The input variables are the following:

- Antenna Data 60: Type, pattern, and gain are specific characteristics of the antenna, including reconfiguration capabilities.

- TX Data 62: EIRP max available, ESD max permitted and reference ESD mask are the maximum operating characteristics approved for the antenna and service in use.

- Link/Service Data 64: Frequency, bandwidth and bit rate are the operating parameters of the service in use. Satellite details: position (GEO scenario), constellation (LEO/MEO scenario) and operating data.

- Dynamics Data 66: Navigation (attitude, heading), geo-location (latitude, longitude) and satellite orbit ephemerides (LEO/MEO scenarios) are the movement data of the earth station or the satellite, depending on the scenario. This data can be provided by the inertial navigation system 50 dedicated or shared with the platform (ARINC 429 Bus in aircraft, for example). It can also include data provided by the satellite operator that establishes the orbital position over time.

- Actual Operating Data 68: Steering angles and operating parameters calculated in the previous iteration. They are used as a reference variable for the calculation in the current iteration.

The input variables are internally processed in the smart aperture antenna controller unit 3 (e.g. using one or more processing units) and output variables are obtained, establishing new operating data 80 for each iteration, in particular new steering angles 82 (including azimuth and elevation) and new operating parameters 84 (including the antenna activation pattern with the active aperture matrix, EIRP, ESD and bitrate). The smart aperture antenna controller unit 3 uses the output data to reconfigure the antenna, reconfigure the modem and apply the new steering angles so that the antenna continuously aims at the satellite.

The activate aperture matrix identifies the active elements that need to be turned on to compose the active aperture shape 14, size 15 and orientation 16 based on the scan $\theta$ and skew $\Phi$ angles after determining 120 the antenna activation pattern. In an embodiment, the activate aperture matrix maximizes the effective diameter of the aperture at the skew $\Phi$ angle, therefore optimizing the ESD. In an embodiment, the extended aperture mode of operation maintains the same (or a very similar) number of active elements as in the nominal aperture mode of operation to avoid higher consumption or dissipation problems.

ESD, EIRP and bitrate are new operating parameters of the transmitting earth station according to the scan $\theta$ and skew $\Phi$ angle conditions. These parameters impose the reconfiguration of the modem 42 to adapt the output power used in the transmission.

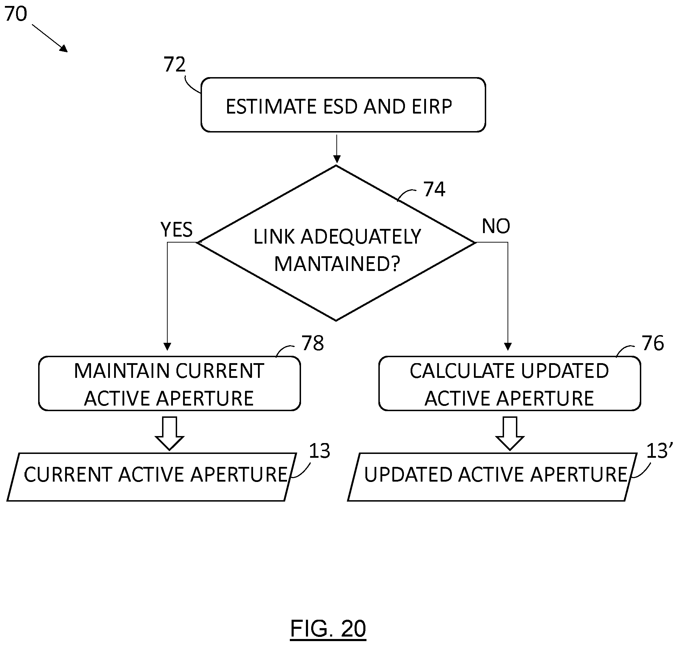

The processing 70 of the input variables may include, according to an embodiment depicted in the flow diagram of **Figure 20,** estimating 72 the allowed ESD and the necessary EIRP from the Antenna Data 60, TX Data 62 and the new steering and skew angles. Under the new conditions, the link between the satellite communications device 40 and the communications satellite 10 is checked 74. In the event that the link cannot be adequately maintained due to ESD limitation, an updated active aperture 13' that achieves an improvement in ESD is calculated 76. If the satellite communications device 40 can maintain the link adequately due to ESD limitation, there is no need to calculate a new, updated active aperture 13', and the current active aperture 13 is preferably maintained 78 (although, alternatively, in this particular case an updated active aperture 13' may also be computed).

The updated active aperture 13' may have an area (or number of activated radiating elements 4) equivalent to a nominal area (corresponding to the nominal aperture mode of operation 24), but with a different shape 14 (e.g. the active area is modified from circular to elliptical) and/or size 15, and a proper orientation 16 to improve the ESD at the skew angle, when compared with the ESD achieved by current active aperture 13. In an embodiment, the orientation is such that the ESD at the skew angle is maximized.

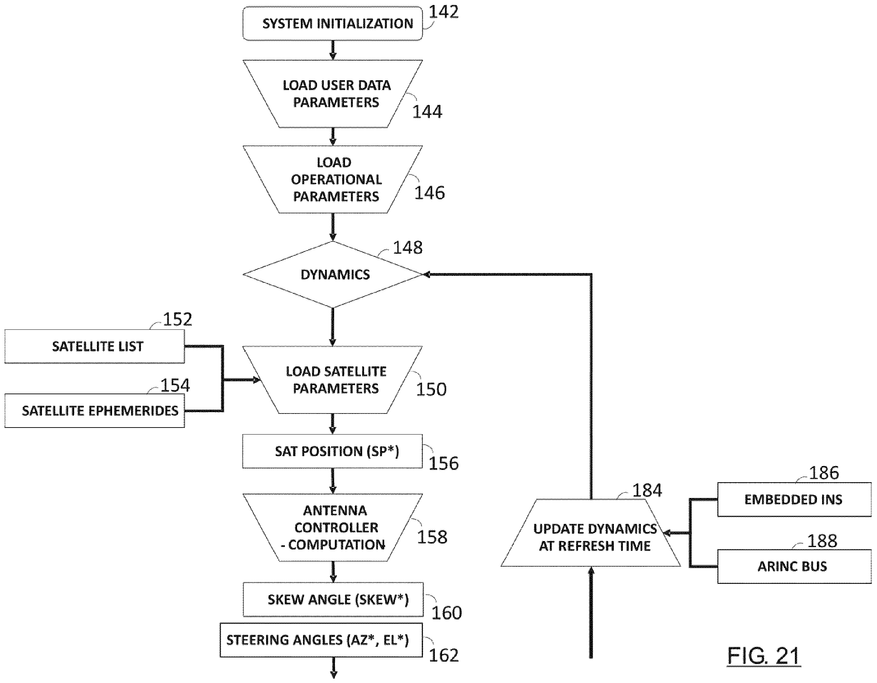

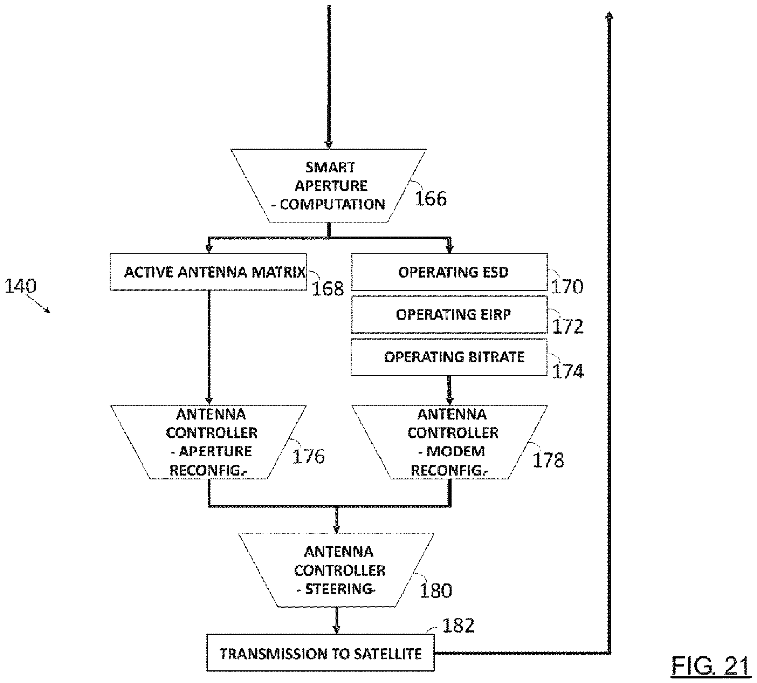

**Figure 21** represents a flowchart of a process for reconfiguring the active aperture 140 to improve the permitted ESD in accordance to an embodiment of the present disclosure. The process follows the following actions and performs the following calculations:

- System initialization 142, wherein the process is initialized.
- Load user data parameters 144.
- Load operational parameters 146.
- Obtain dynamics 148.
- Load satellite parameters 150 from a satellite list 152 and satellite ephemerides 154.
- Obtain satellite position 156, denoted as SP*.
- Antenna controller computation 158 to obtain skew angle 160 (denoted as SKEW*) and steering angles 162 (azimuth and elevation, respectively denoted as AZ*, EL*).
- Smart aperture computation 166 is then performed to obtain an active antenna matrix 168, an operating ESD 170, an operating EIRP 172 and an operating bitrate 174.
- Once these parameters are calculated, the antenna controller proceeds to perform aperture reconfiguration 176, modem reconfiguration 178 and steering 180 of the antenna.

- Finally, the antenna system 1 proceeds with the transmission to the satellite 182.
- The dynamics is updated 184 at a certain refresh rate, on each iteration._This data can be obtained, for instance, from an embedded inertial navigation system 50, an ARINC Bus or any other means for obtaining navigation data.
- The process is iteratively repeated, reconfiguring the active aperture and other operating parameters on each iteration.

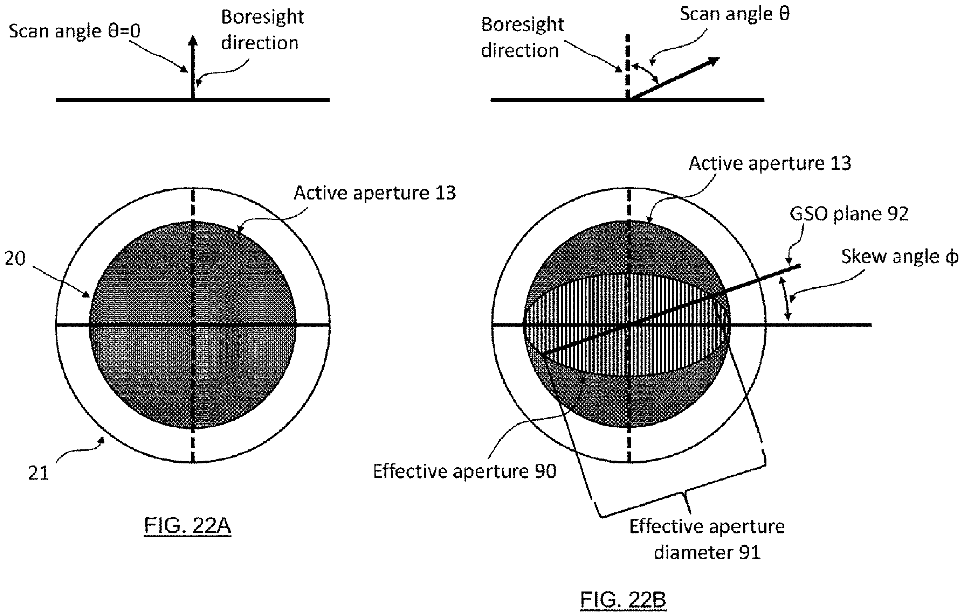

**Figures 22A** and **22B** show the smart aperture electronically steerable antenna 2 working in a nominal aperture mode of operation 24. In the example of Figure 22A the scan angle $\theta$ is 0 degrees and all the radiating elements 4 within the inner nominal region 20 are activated (forming the active aperture 13), leading to a nominal consumption. In Figure 22B the scan angle $\theta$ is higher than 0, and the effective aperture 90 and the corresponding effective aperture diameter 91 for the skew angle $\Phi$ at the geostationary orbit (GSO) plane 92 are depicted.

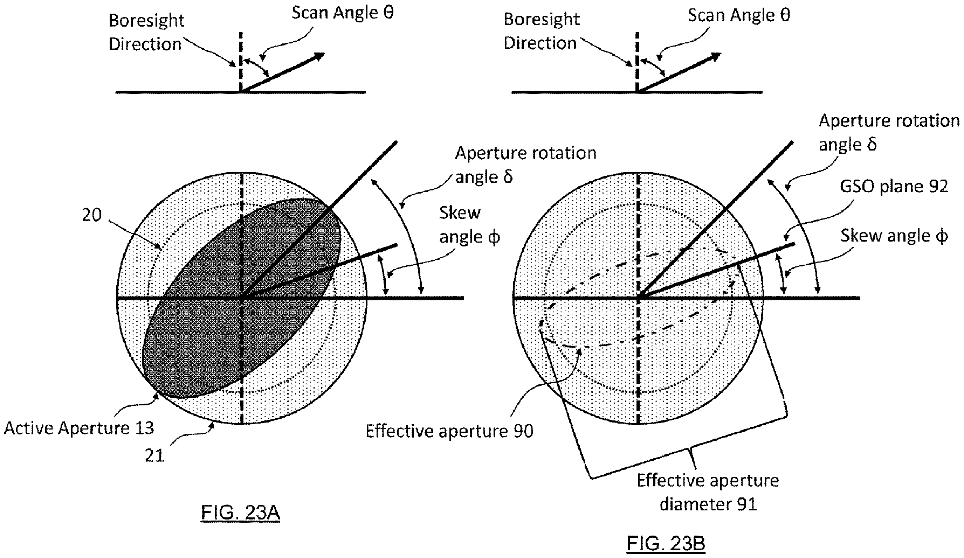

**Figure 23A** show the smart aperture electronically steerable antenna 2 working in an extended aperture mode of operation 25 at the same scan angle $\theta$ of Figure 22B, in which radiating elements 4 of both the inner nominal region 20 and the extended region 21 are selectively activated to form a determined shape 14, in this example an ellipse, with a certain size 15 and orientation 16 (aperture rotation angle $\delta$). The selected active aperture 13 (shape, size and/or orientation) is a function of a certain combination of scan and skew angles ($\theta,\Phi$). **Figure 23B** highlights the effective aperture 90 and effective aperture diameter 91 at GSO plane 92 for the active aperture 13 of Figure 23A at the particular combination of scan and skew angles ($\theta,\Phi$).

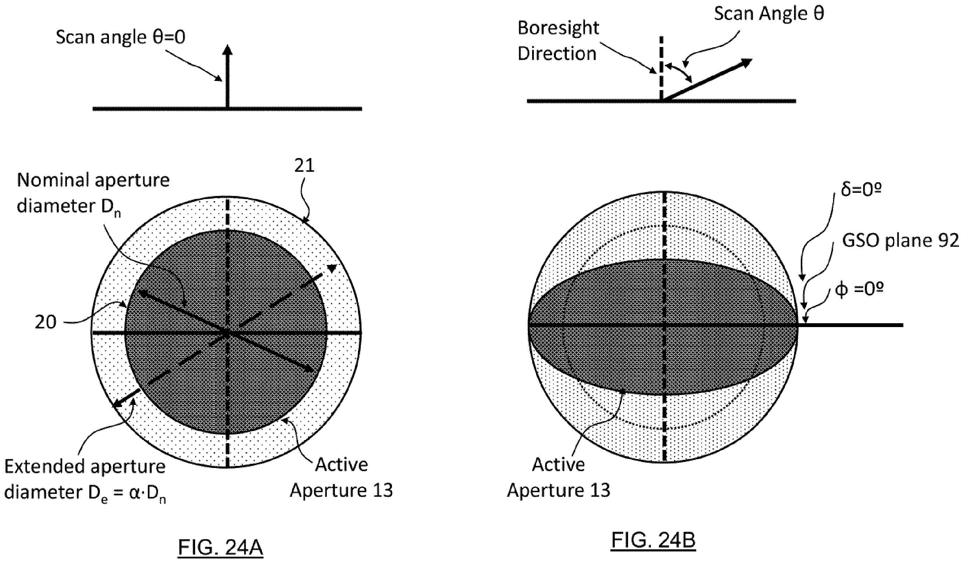

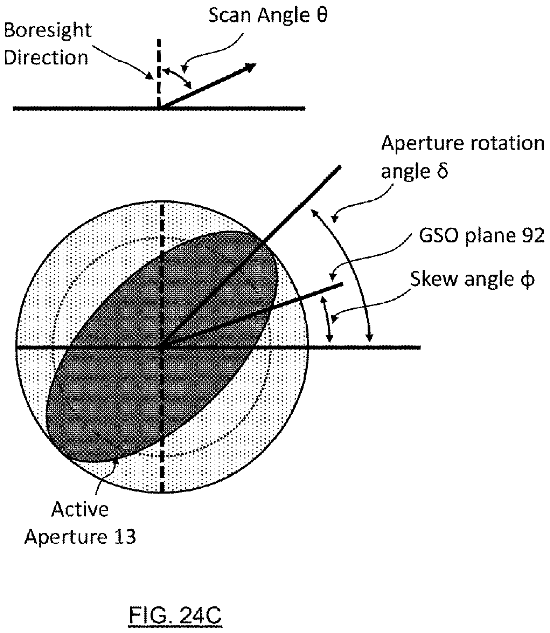

**Figures 24A, 24B** and **24C** shows a comparison of aperture size, area and number of activated radiating elements 4 in different configuration, scan angle $\theta$, skew angle $\Phi$ and aperture rotation angle $\delta$, wherein a same area for the active aperture 13 and a same number of radiating elements 4 is maintained.

In the example of **Figure 24A,** in which scan angle $\theta=0°$ and a circular shape corresponding to the inner nominal region 20 is selected for the active aperture 13, the following equations apply, wherein nominal aperture diameter $D_n$ corresponds to the diameter of the inner nominal region 20, R is the radius of the inner nominal region 20, n is the number of radiating elements 4 in the diameter, and $\lambda$ is the wavelength at maximum operating frequency:

$$\text{Nominal aperture diameter } D_n = n \cdot \lambda$$

$$\text{Nominal aperture area } A_n = \pi \cdot R_n^2 = \pi \cdot (n \cdot \lambda/2)^2$$

$$\text{Inter radiating element distance, } dRe = \lambda/2$$

$$\text{Number of radiating elements } n_n = A_n/dRe^2 = \pi \cdot (n \cdot \lambda/2)^2/(\lambda/2)^2 = \pi \cdot n^2$$

If all the radiating elements 4 of the extended region 21 are used to form an extended active aperture, thus maintaining the circle shape, the following conditions are fulfilled, wherein $\alpha$ is an oversize factor greater than 1 that defines the relation between the diameter $D_n$ of the inner nominal region 20 and the diameter $D_e$ of the extended region 21:

$$\text{Extended aperture diameter } D_e = \alpha \cdot D_n = \alpha \cdot n \cdot \lambda$$

$$\text{Extended aperture area } A_e = \pi \cdot R_e^2 = \pi \cdot (\alpha \cdot n \cdot \lambda/2)^2$$

$$\text{Number of radiating elements } n_e = A_e/dRe^2 = \pi \cdot (\alpha \cdot n \cdot \lambda/2)^2/(\lambda/2)^2 = \pi \cdot (\alpha \cdot n)^2$$

$$\text{Ratio in number of radiating elements} = n_e/n_n = \pi \cdot (\alpha \cdot n)^2/\pi \cdot n^2 = \alpha^2$$

Therefore, the number of radiating elements in the extended region 21 is $\alpha^2$ times the number of elements in the inner nominal region 20.

In the example of **Figure 24B,** which corresponds to an extended aperture mode of operation 25, for a certain

scan angle $\theta$ and for a skew angle $\Phi=0$, and the shape of the active aperture 13 is elliptical, the major axis of which corresponds to the extended aperture diameter $D_e$. The aperture rotation angle $\delta$ of the ellipse is 0. The following conditions are fulfilled:

$$\text{Major axis diameter DMA} = De = \alpha \cdot D_n$$

$$\text{Minor axis diameter Dma} = D_n/\alpha$$

$$\text{Active aperture area A1} = \pi \cdot DMA/2 \cdot Dma/2 = \pi \cdot (D_n/2)^2 = \pi \cdot (n \cdot \lambda/2)^2$$

$$\text{Inter radiating element distance dRe} = \lambda/2$$

$$\text{Number of radiating elements} = A1/dRe^2 = \pi \cdot n^2$$

$$\text{Ratio in number of radiating elements} = 1$$

Therefore, the number of radiating elements in the active aperture 13 of Figure 24B is equal to the number of radiating elements 4 in the inner nominal region 20. The consumption in the extended aperture mode of operation 25 of Figure 24B is therefore maintained when compared with the consumption in the nominal aperture mode of operation 24 of Figure 24A.

**Figure 24C** shows another example of an extended aperture mode of operation 25 for a certain combination of scan $\theta$ and skew $\Phi$ angles, in which the shape and size of the active aperture 13 is the same as that of Figure 24B (elliptical, the major axis of the ellipse being the extended aperture diameter $D_e$) but the ellipse is rotated a certain aperture rotation angle $\delta$. In this case the number of activated radiating elements 4 are the same as those of Figure 24B, and equal to the number of radiating elements 4 in the inner nominal region 20. The area of the active aperture 13, and therefore the number of activated radiating elements 4 and the consumption, is maintained constant in the three examples of Figures 24A-C.

The characteristics of the elliptical active aperture 13 of Figure 24C may be defined, for a certain eccentricity, by the oversize factor $\alpha$ and the aperture rotation angle $\delta$. The aperture rotation angle $\delta$ defines how the ellipse should be optimally oriented so that the effective diameter of the aperture is improved (and, preferably maximized) based on the scan $\theta$ and skew $\Phi$ angles.

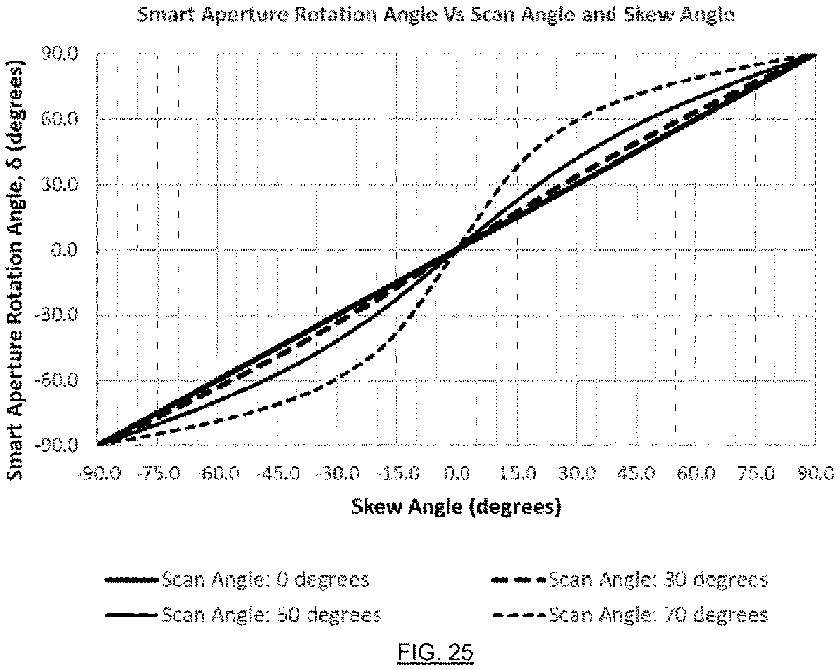

**Figure 25** shows, for the example of Figure 24C, an optimal aperture rotation angle $\delta$ obtained as a function of a combination of scan and skew angles $(\theta,\Phi)$, in which the effective aperture diameter 91 at the skew angle $\Phi$ is maximized. The active aperture orientation 16 may be obtained 126, for instance, using graphs (as in Fig. 25) or tables including optimal aperture rotation angles $\delta$ for different combination of scan and skew angles $(\theta,\Phi)$ values, wherein the graphs or tables may be predefined for the particular active aperture shape 14 and/or active aperture size 15 selected. If a particular combination of scan and skew angles $(\theta,\Phi)$ values cannot be found on a table or graph, the value for the aperture rotation angles $\delta$ may be inferred (e.g. by performing bilinear interpolation). Alternatively, the antenna smart aperture antenna controller unit 3 may dynamically compute an estimated ESD for different orientations to obtain the optimal aperture rotation angle $\delta$ that maximizes the ESD at the skew angle $\Phi$.

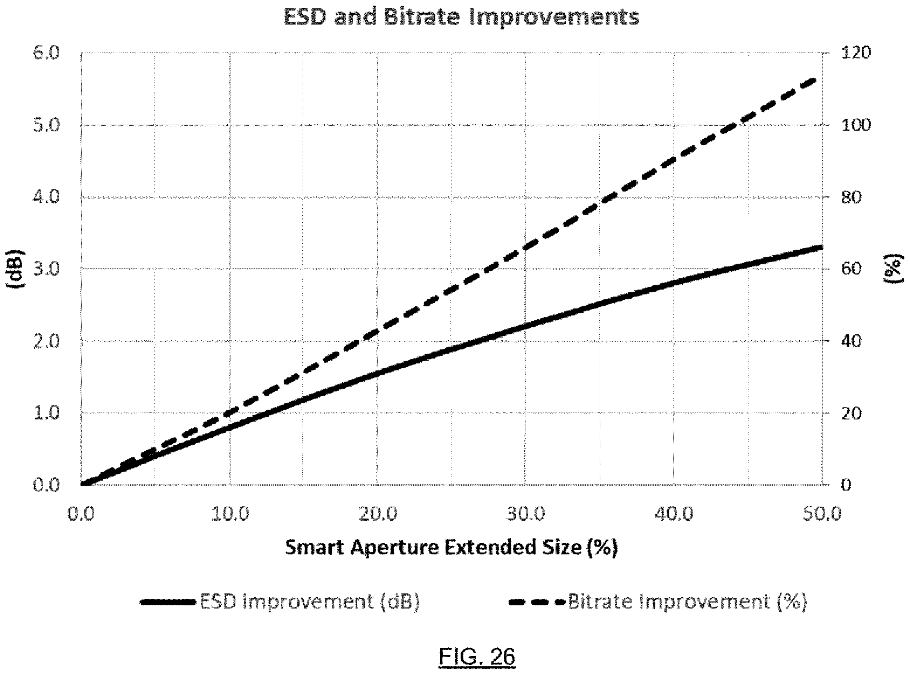

**Figure 26** represents, for the example of Figure 24C, the improvement in ESD and in bitrate as a function of the oversize factor $\alpha$.

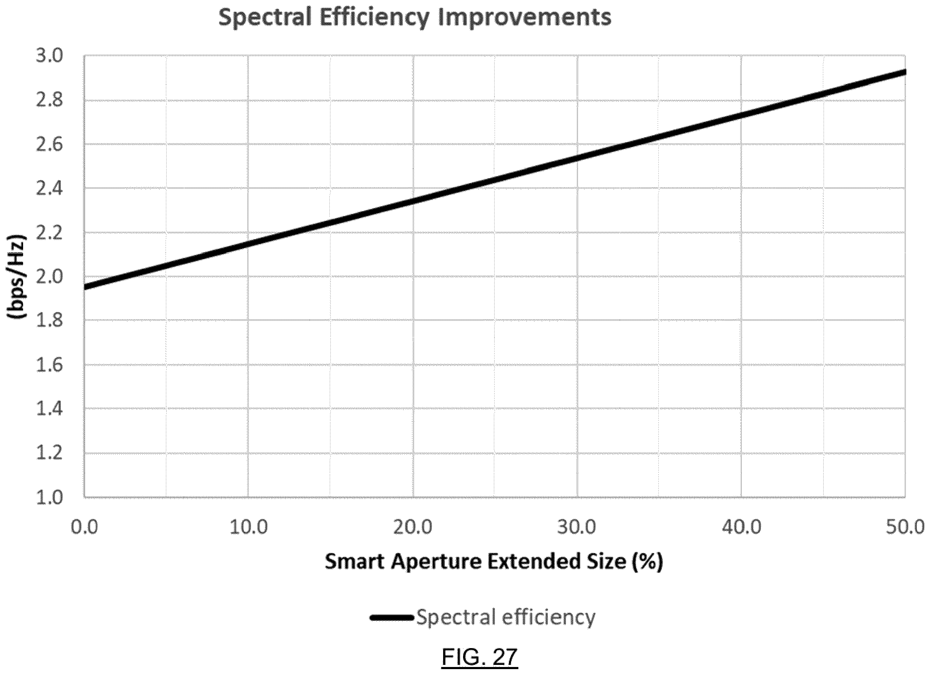

**Figure 27** illustrates, for the example of Figure 24C, the improvement in spectral efficiency in bps/Hz as a function of the oversize factor $\alpha$, wherein a system operating in DVB-S2X (8-PSK 2/3, Roll-Off = 5%) and C/N = 6 dB in nominal size is the reference.

The active aperture shape 14 selected 122 may be predefined (e.g. always considering elliptical active apertures 13). Alternatively, the shape selection may be determined by the values of the scan and skew angles $(\theta,\Phi)$ and/or other operating parameters. In an embodiment, several shapes may be considered at a time, calculating antenna activation patterns 12 for each shape and selecting the shape with the better performance (e.g. highest ESD).

The active aperture size 15 may be determined 124 according to a predefined size, consumption or number of radiating elements, which may be defined for instance by a consumption factor $\beta$. The nominal size of the active aperture 13 in the nominal aperture mode of operation 24 may be obtained from the nominal requirements of the antenna:

EIRP and ESD in boresight, consumption and dissipation. The extended size of the active aperture in the extended aperture mode of operation 25 may be obtained from the analysis of worst cases in scan and skew angles together with the degradation allowed (and preferably maintaining the overall consumption and dissipation constant).

The active aperture size 15 may vary on each iteration or may be kept constant, depending for instance on the ESD improvement (e.g. if the calculated antenna activation pattern 12 for a determined shape and size does not achieve at least a certain ESD, even with an optimal aperture rotation angle $\delta$, the consumption factor $\beta$ may be increased and a greater active aperture size 15 may be considered for the new active aperture 13, which will yield better results at a higher consumption).

The consumption factor $\beta$ may be limited depending on how much less power can be emitted maintaining a quality link and how much more power can be consumed in full active aperture. In an embodiment, a maximum value of $\beta$ is defined as the full extended aperture, $\beta = \alpha^2$, and a minimum value of $\beta = 0.25$ can be considered, which is equivalent to 12dB less power emitted and quarter the power consumed.

Under normal conditions, ESD regulation limits the operating point of the satellite communications terminal. Depending on the skew and scan angles, this limitation may increase, and the working power and bandwidth must be modified and adapted to the new limitation. Using the active aperture reconfiguration of the antenna proposed by the present invention, an improvement of the ESD (EIRP Spectral Density) can be achieved, so that the EIRP working point and the bandwidth can follow a less restrictive limitation than when the active aperture is not reconfigured (i.e. fixed active aperture). Obtaining a higher ESD can provide, at least, any of the following benefits:

- Output more power with a constant occupied bandwidth. Therefore, EIRP is changed, achieving higher link margin (C/N increases), improved bit error rates, higher link reliability, and a margin against propagation losses.

- Output more power with an increased occupied bandwidth. Therefore, EIRP and bitrate is changed, with the same C/N but with greater communication capacity at the cost of higher consumption.

**Claims**

1. An antenna system for a satellite communications device, the antenna system (1) comprising:

   a smart aperture electronically steerable antenna (2) comprising a plurality of radiating elements (4), wherein the radiating elements (4) are selectively activated; and
   a smart aperture antenna controller unit (3) configured to:

   obtain (110) a scan angle ($\theta$) and a skew angle ($\Phi$) relative to a communications satellite (10);
   determine (120) an antenna activation pattern (12) including the radiating elements (4) that are selectively activated to form an active aperture (13), wherein the antenna activation pattern (12) is based at least on the scan angle ($\theta$) and the skew angle ($\Phi$); and
   control (130) the smart aperture electronically steerable antenna (2) according to the antenna activation pattern (12);

   **characterized in that** the radiating elements (4) are arranged along an inner nominal region (20) and an extended region (21), outer to the inner nominal region (20), of the smart aperture electronically steerable antenna (2);
   and wherein to determine (120) the antenna activation pattern (12) the smart aperture antenna controller unit (3) is configured to:

   select (128) a mode of operation from at least:

   a nominal aperture mode of operation (24), in which only a plurality of radiating elements (4) of the inner nominal region (20) are selectively activated; and
   an extended aperture mode of operation (25), in which a plurality of radiating elements (4) of both the inner nominal region (20) and the extended region (21) are selectively activated; and

   determine the antenna activation pattern (12) for the selected mode of operation.

2. The antenna system of claim 1, wherein to determine (120) the antenna activation pattern (12) the smart aperture antenna controller unit (3) is configured to:

select (122) a shape (14) of the active aperture (13) defined by the antenna activation pattern (12);
determine (124) a size (15) of the active aperture (13) for the selected shape (14) based on a number of radiating elements (4) that are selectively activated; and
obtain (126) an orientation (16) of the active aperture (13) such that a EIRP spectral density, ESD, emitted by the smart aperture electronically steerable antenna (2) is improved in the scan angle ($\theta$) and skew angle ($\Phi$) for the selected shape (14) and size (15).

3. The antenna system of any preceding claim, wherein the antenna activation pattern (12) forms a circular active aperture, an elliptical active aperture or a polygonal active aperture.

4. The antenna system of any preceding claim, wherein the inner nominal region (20) is circular and the extended region (21) comprises an annular region defined between the circular inner nominal region of radius R and a larger circle of radius $\alpha \cdot R$, with $\alpha$ being an oversize factor greater than 1.

5. The antenna system of claim 4, wherein in the extended aperture mode of operation (25) the smart aperture antenna controller unit (3) is configured to selectively activate radiating elements (4) of the inner nominal region (20) and the extended region (21) such that the activation pattern (12) forms an elliptical active aperture (13).

6. The antenna system of claim 5, wherein the elliptical active aperture (13) is oriented according to an aperture rotation angle ($\delta$) such that a EIRP spectral density, ESD, emitted by the smart aperture electronically steerable antenna (2) is improved in the scan angle ($\theta$) and skew angle ($\Phi$).

7. The antenna system of any preceding claim, wherein the number of radiating elements (4) selectively activated in the extended aperture mode of operation (25) is $\beta \cdot N$, with N being the number of radiating elements (4) of the inner nominal region (20) and $\beta$ a consumption factor.

8. A satellite communications device (40), comprising:

an antenna system (1) according to any preceding claim;
a transceiver (46); and
a modem (42).

9. A computer-implemented method for operating an antenna system of a satellite communications device, the antenna system comprising a smart aperture electronically steerable antenna (2) including a plurality of selectively activable radiating elements (4), the method (100) comprising:

obtaining (110) a scan angle ($\theta$) and a skew angle ($\Phi$) relative to a communications satellite (10);
determining (120) an antenna activation pattern (12) including the radiating elements (4) that are selectively activated to form an active aperture (13), wherein the antenna activation pattern (12) is based at least on the scan angle ($\theta$) and the skew angle ($\Phi$); and
controlling (130) the smart aperture electronically steerable antenna (2) according to the antenna activation pattern (12);
**characterized in that** the radiating elements are arranged along an inner nominal region (20) and an extended region (21), outer to the inner nominal region (20), of the smart aperture electronically steerable antenna (2); and wherein determining (120) the antenna activation pattern (12) comprises:

selecting (128) a mode of operation from at least:

a nominal aperture mode of operation (24), in which only a plurality of radiating elements (4) of the inner nominal region (20) are selectively activated; and
an extended aperture mode of operation (25), in which a plurality of radiating elements (4) of both the inner nominal region (20) and the extended region (21) are selectively activated; and

determining the antenna activation pattern (12) for the selected mode of operation.

10. The computer-implemented method of claim 9, wherein determining (120) the antenna activation pattern (12) comprises:

selecting (122) a shape (14) of the active aperture (13) defined by the antenna activation pattern (12);

determining (124) a size (15) of the active aperture (13) for the selected shape (14) based on a number of radiating elements (4) that are selectively activated; and

obtaining (126) an orientation (16) of the active aperture (13) such that a EIRP spectral density, ESD, emitted by the smart aperture electronically steerable antenna (2) is improved in the scan angle ($\theta$) and skew angle ($\Phi$) for the selected shape (14) and size (15).

11. The computer-implemented method according to any of claims 9 to 10, wherein the shape (14) of the active aperture (13) is circular, elliptical or polygonal.

12. A computer program product for operating an antenna system of a satellite communications device, comprising instructions which, when the program is executed on a processor, cause the processor to carry out the computer-implemented method of any of claims 9 to 11.

13. A computer-readable storage medium having recorded thereon instructions, which, when executed by a processor, cause the processor to carry out the computer-implemented method of any of claims 9 to 11.

**Patentansprüche**

1. Antennensystem für eine Satellitenkommunikationsvorrichtung, wobei das Antennensystem (1) Folgendes umfasst:

eine elektronisch lenkbare Antenne (2) mit intelligenter Apertur, die eine Vielzahl von Strahlungselementen (4) umfasst, wobei die Strahlungselemente (4) selektiv aktiviert werden; und

eine Steuerungseinheit (3) für die Antenne mit intelligenter Apertur, die für Folgendes ausgebildet ist:

Erhalten (110) eines Scanwinkels ($\theta$) und eines Neigungswinkels ($\Phi$) in Bezug auf einen Kommunikationssatelliten (10);

Bestimmen (120) eines Antennenaktivierungsmusters (12) einschließlich der Strahlungselemente (4), die selektiv aktiviert werden, um eine aktive Apertur (13) zu bilden, wobei das Antennenaktivierungsmuster (12) mindestens auf dem Scanwinkel ($\theta$) und dem Neigungswinkel ($\Phi$) basiert; und

Steuern (130) der elektronisch lenkbaren Antenne (2) mit intelligenter Apertur nach dem Antennenaktivierungsmuster (12);

**dadurch gekennzeichnet, dass** die Strahlungselemente (4) entlang einer inneren nominalen Region (20) und einer erweiterten Region (21), die sich außerhalb der inneren nominalen Region (20) befindet, der elektronisch steuerbaren Antenne (2) mit intelligenter Apertur angeordnet sind;

und wobei zum Bestimmen (120) des Antennenaktivierungsmusters (12) die Steuerungseinheit (3) für die Antenne mit intelligenter Apertur für Folgendes ausgebildet ist:

Auswählen (128) eines Betriebsmodus aus mindestens:

einem Nominalapertur-Betriebsmodus (24), bei dem lediglich eine Vielzahl von Strahlungselementen (4) der inneren nominalen Region (20) selektiv aktiviert wird; und

einem Betriebsmodus mit erweiterter Apertur (25), bei dem eine Vielzahl von Strahlungselementen (4) sowohl der inneren nominalen Region (20) als auch der erweiterten Region (21) selektiv aktiviert wird; und

Bestimmen des Antennenaktivierungsmusters (12) für den selektiven Betriebsmodus.

2. Antennensystem nach Anspruch 1, wobei zum Bestimmen (120) des Antennenaktivierungsmusters (12) die Steuerungseinheit (3) für die Antenne mit intelligenter Apertur für Folgendes ausgebildet ist:

Auswählen (122) einer Form (14) der aktiven Apertur (13), die durch das Antennenaktivierungsmuster (12) definiert ist;

Bestimmen (124) einer Größe (15) der aktiven Apertur (13) für die ausgewählte Form (14) basierend auf einer Anzahl von Strahlungselementen (4), die selektiv aktiviert werden; und

Erhalten (126) einer Ausrichtung (16) der aktiven Apertur (13), so dass eine EIRP-Spektraldichte, ESD, die von der elektronisch lenkbaren Antenne (2) mit intelligenter Apertur emittiert wird, in dem Scanwinkel ($\theta$) und Neigungswinkel ($\Phi$) für die ausgewählte Form (14) und Größe (15) verbessert wird.

3. Antennensystem nach einem der vorhergehenden Ansprüche, wobei das Antennenaktivierungsmuster (12) eine kreisförmige aktive Apertur, eine elliptische aktive Apertur oder eine polygonale aktive Apertur bildet.

4. Antennensystem nach einem der vorhergehenden Ansprüche, wobei die innere nominale Region (20) kreisförmig ist und die erweiterte Region (21) eine ringförmige Region umfasst, die zwischen der kreisförmigen inneren nominalen Region mit dem Radius R und einem größeren Kreis mit dem Radius $\alpha \cdot R$ definiert ist, wobei $\alpha$ ein Übermaßfaktor größer als 1 ist.

5. Antennensystem nach Anspruch 4, wobei in dem Betriebsmodus mit erweiterter Apertur (25) die Steuerungseinheit (3) für die Antenne mit intelligenter Apertur ausgebildet ist, um selektiv Strahlungselemente (4) der inneren nominalen Region (20) und der erweiterten Region (21) zu aktivieren, so dass das Aktivierungsmuster (12) eine elliptische aktive Apertur (13) bildet.

6. Antennensystem nach Anspruch 5, wobei die elliptische aktive Apertur (13) nach einem Aperturdrehwinkel ($\delta$) so ausgerichtet ist, dass eine EIRP-Spektraldichte, ESD, die von der elektronisch lenkbaren Antenne (2) mit intelligenter Apertur emittiert wird, in dem Scanwinkel ($\theta$) und Neigungswinkel ($\Phi$) verbessert wird.

7. Antennensystem nach einem der vorhergehenden Ansprüche, wobei die Anzahl der Strahlungselemente (4), die in dem Betriebsmodus mit erweiterter Apertur (25) selektiv aktiviert werden, $\beta \cdot N$ beträgt, wobei N die Anzahl der Strahlungselemente (4) der inneren nominalen Region (20) und $\beta$ ein Verbrauchsfaktor ist.

8. Satellitenkommunikationsvorrichtung (40), Folgendes umfassend:

ein Antennensystem (1) nach einem der vorhergehenden Ansprüche;
einen Transceiver (46); und
ein Modem (42).

9. Computerimplementiertes Verfahren zum Betreiben eines Antennensystems einer Satellitenkommunikationsvorrichtung, wobei das Antennensystem eine elektronisch lenkbare Antenne (2) mit intelligenter Apertur umfasst, die eine Vielzahl von selektiv aktivierbaren Strahlungselementen (4) einschließt, wobei das Verfahren (100) Folgendes umfasst:

Erhalten (110) eines Scanwinkels ($\theta$) und eines Neigungswinkels ($\Phi$) in Bezug auf einen Kommunikationssatelliten (10);
Bestimmen (120) eines Antennenaktivierungsmusters (12) einschließlich der Strahlungselemente (4), die selektiv aktiviert werden, um eine aktive Apertur (13) zu bilden, wobei das Antennenaktivierungsmuster (12) mindestens auf dem Scanwinkel ($\theta$) und dem Neigungswinkel ($\Phi$) basiert; und
Steuern (130) der elektronisch lenkbaren Antenne (2) mit intelligenter Apertur nach dem Antennenaktivierungsmuster (12);
**dadurch gekennzeichnet, dass** die Strahlungselemente entlang einer inneren nominalen Region (20) und einer erweiterten Region (21), die sich außerhalb der inneren nominalen Region (20) befindet, der elektronisch steuerbaren Antenne (2) mit intelligenter Apertur angeordnet sind;
und wobei das Bestimmen (120) des Antennenaktivierungsmusters (12) Folgendes umfasst:
Auswählen (128) eines Betriebsmodus aus mindestens:

einem Nominalapertur-Betriebsmodus (24), bei dem lediglich eine Vielzahl von Strahlungselementen (4) der inneren nominalen Region (20) selektiv aktiviert wird; und
einem Betriebsmodus mit erweiterter Apertur (25), bei dem eine Vielzahl von Strahlungselementen (4) sowohl der inneren nominalen Region (20) als auch der erweiterten Region (21) selektiv aktiviert wird; und
Bestimmen des Antennenaktivierungsmusters (12) für den selektiven Betriebsmodus.

10. Computerimplementiertes Verfahren nach Anspruch 9, wobei das Bestimmen (120) des Antennenaktivierungsmusters (12) Folgendes umfasst:

Auswählen (122) einer Form (14) der aktiven Apertur (13), die durch das Antennenaktivierungsmuster (12) definiert ist;
Bestimmen (124) einer Größe (15) der aktiven Apertur (13) für die ausgewählte Form (14) basierend auf einer Anzahl von Strahlungselementen (4), die selektiv aktiviert werden; und

Erhalten (126) einer Ausrichtung (16) der aktiven Apertur (13), so dass eine EIRP-Spektraldichte, ESD, die von der elektronisch lenkbaren Antenne (2) mit intelligenter Apertur emittiert wird, in dem Scanwinkel ($\theta$) und Neigungswinkel ($\Phi$) für die ausgewählte Form (14) und Größe (15) verbessert wird.

11. Computerimplementiertes Verfahren nach einem der Ansprüche 9 bis 10, wobei die Form (14) der aktiven Apertur (13) kreisförmig, elliptisch oder polygonal ist.

12. Computerprogrammprodukt zum Betreiben eines Antennensystems einer Satellitenkommunikationsvorrichtung, das Anweisungen umfasst, die, wenn das Programm auf einem Prozessor ausgeführt wird, den Prozessor veranlassen, das computerimplementierte Verfahren nach einem der Ansprüche 9 bis 11 auszuführen.

13. Computerlesbares Speichermedium mit darauf aufgezeichneten Anweisungen, die, wenn sie von einem Prozessor ausgeführt werden, den Prozessor veranlassen, das computerimplementierte Verfahren nach einem der Ansprüche 9 bis 11 auszuführen.

**Revendications**

1. Système d'antenne pour dispositif de communications par satellite, le système d'antenne (1) comprenant :

une antenne électroniquement orientable à ouverture intelligente (2) comprenant une pluralité d'éléments rayonnants (4), dans lequel les éléments rayonnants (4) sont activés sélectivement ; et
une unité de contrôleur d'antenne à ouverture intelligente (3) configurée pour :

obtenir (110) un angle de balayage ($\theta$) et un angle d'inclinaison ($\Phi$) par rapport à un satellite de communications (10) ;
déterminer (120) un motif d'activation d'antenne (12) comportant les éléments rayonnants (4) qui sont activés sélectivement pour former une ouverture active (13), dans lequel le motif d'activation d'antenne (12) est basé au moins sur l'angle de balayage ($\theta$) et l'angle d'inclinaison ($\Phi$) ; et
contrôler (130) l'antenne électroniquement orientable à ouverture intelligente (2) selon le motif d'activation d'antenne (12) ;
**caractérisé en ce que** les éléments rayonnants (4) sont disposés le long d'une région nominale interne (20) et une région étendue (21), extérieure à la région nominale interne (20), de l'antenne électroniquement orientable à ouverture intelligente (2) ;
et dans lequel, pour déterminer (120) le motif d'activation d'antenne (12), l'unité de contrôleur d'antenne à ouverture intelligente (3) est configuré pour :
sélectionner (128) un mode de fonctionnement parmi au moins :

un mode de fonctionnement à ouverture nominale (24), dans lequel seulement une pluralité d'éléments rayonnants (4) de la région nominale interne (20) sont activés sélectivement ; et
un mode de fonctionnement à ouverture étendue (25), dans lequel une pluralité d'éléments rayonnants (4) de la région nominale interne (20) ainsi que de la région étendue (21) sont activés sélectivement ; et
déterminer le motif d'activation d'antenne (12) pour le mode de fonctionnement sélectionné.

2. Système d'antenne selon la revendication 1, dans lequel, pour déterminer (120) le motif d'activation d'antenne (12), l'unité de contrôleur d'antenne à ouverture intelligente (3) est configurée pour :

sélectionner (122) une forme (14) de l'ouverture active (13) définie par le motif d'activation d'antenne (12) ;
déterminer (124) une taille (15) de l'ouverture active (13) pour la forme sélectionnée (14) sur la base d'un nombre d'éléments rayonnants (4) qui sont activés sélectivement ; et
obtenir (126) une orientation (16) de l'ouverture active (13) de sorte qu'une densité spectrale d'EIRP, ESD, émise par l'antenne électroniquement orientable à ouverture intelligente (2) est améliorée dans l'angle de balayage ($\theta$) et l'angle d'inclinaison ($\Phi$) pour la forme sélectionnée (14) et la taille (15).

3. Système d'antenne selon l'une quelconque des revendications précédentes, dans lequel le motif d'activation d'antenne (12) forme une ouverture active circulaire, une ouverture active elliptique ou une ouverture active polygonale.

4. Système d'antenne selon l'une quelconque des revendications précédentes, dans lequel la région nominale interne (20) est circulaire et la région étendue (21) comprend une région annulaire définie entre la région nominale interne circulaire de rayon R et un cercle plus grand de rayon $\alpha \cdot$R, $\alpha$ étant un facteur de surdimensionnement supérieur à 1.

5. Système d'antenne selon la revendication 4, dans lequel, dans le mode de fonctionnement à ouverture étendue (25), l'unité de contrôleur d'antenne à ouverture intelligente (3) est configurée pour activer sélectivement les éléments rayonnants (4) de la région nominale interne (20) et la région étendue (21) de sorte que le motif d'activation (12) forme une ouverture active elliptique (13).

6. Système d'antenne selon la revendication 5, dans lequel l'ouverture active elliptique (13) est orientée selon un angle de rotation d'ouverture ($\delta$) de sorte qu'une densité spectrale d'EIRP, ESD, émise par l'antenne électroniquement orientable à ouverture intelligente (2) est améliorée dans l'angle de balayage ($\theta$) et l'angle d'inclinaison ($\Phi$).

7. Système d'antenne selon l'une quelconque des revendications précédentes, dans lequel le nombre d'éléments rayonnants (4) sélectivement activés dans le mode de fonctionnement à ouverture étendue (25) est $\beta \cdot$N, N étant le nombre d'éléments rayonnants (4) de la région nominale interne (20) et $\beta$ étant un facteur de consommation.

8. Dispositif de communications par satellite (40), comprenant :

   un système d'antenne (1) selon l'une quelconque des revendications précédentes ;
   un émetteur-récepteur (46) ; et
   un modem (42).

9. Procédé mis en oeuvre par ordinateur permettant de faire fonctionner un système d'antenne d'un dispositif de communications par satellite, le système d'antenne comprenant une antenne électroniquement orientable à ouverture intelligente (2) comportant une pluralité d'éléments rayonnants sélectivement activables (4), le procédé (100) comprenant :

   obtenir (110) un angle de balayage ($\theta$) et un angle d'inclinaison ($\Phi$) par rapport à un satellite de communications (10) ;
   déterminer (120) un motif d'activation d'antenne (12) comportant les éléments rayonnants (4) qui sont activés sélectivement pour former une ouverture active (13), dans lequel le motif d'activation d'antenne (12) est basé au moins sur l'angle de balayage ($\theta$) et l'angle d'inclinaison ($\Phi$) ; et
   contrôler (130) l'antenne électroniquement orientable à ouverture intelligente (2) selon le motif d'activation d'antenne (12) ;
   **caractérisé en ce que** les éléments rayonnants sont disposés le long d'une région nominale interne (20) et une région étendue (21), extérieure à la région nominale interne (20), de l'antenne électroniquement orientable à ouverture intelligente (2) ;
   et dans lequel déterminer (120) le motif d'activation d'antenne (12) comprend :
   sélectionner (128) un mode de fonctionnement parmi au moins :

      un mode de fonctionnement à ouverture nominale (24), dans lequel seulement une pluralité d'éléments rayonnants (4) de la région nominale interne (20) sont activés sélectivement ; et
      un mode de fonctionnement à ouverture étendue (25), dans lequel une pluralité d'éléments rayonnants (4) de la région nominale interne (20) ainsi que de la région étendue (21) sont activés sélectivement ; et
      déterminer le motif d'activation d'antenne (12) pour le mode de fonctionnement sélectionné.

10. Procédé mis en oeuvre par ordinateur selon la revendication 9, dans lequel déterminer (120) le motif d'activation d'antenne (12) comprend :

   sélectionner (122) une forme (14) de l'ouverture active (13) définie par le motif d'activation d'antenne (12) ;
   déterminer (124) une taille (15) de l'ouverture active (13) pour la forme sélectionnée (14) sur la base d'un nombre d'éléments rayonnants (4) qui sont activés sélectivement ; et
   obtenir (126) une orientation (16) de l'ouverture active (13) de sorte qu'une densité spectrale d'EIRP, ESD, émise par l'antenne électroniquement orientable à ouverture intelligente (2) est améliorée dans l'angle de balayage ($\theta$) et l'angle d'inclinaison ($\Phi$) pour la forme sélectionnée (14) et la taille (15).

11. Procédé mis en oeuvre par ordinateur selon l'une quelconque des revendications 9 à 10, dans lequel la forme (14) de l'ouverture active (13) est circulaire, elliptique ou polygonale.

**12.** Produit de programme informatique permettant de faire fonctionner un système d'antenne d'un dispositif de communications par satellite, comprenant des instructions qui, lorsque le programme est exécuté sur un processeur, amènent le processeur à exécuter le procédé mis en oeuvre par ordinateur selon l'une quelconque des revendications 9 à 11.

**13.** Support de stockage lisible par ordinateur ayant des instructions enregistrées sur celui-ci, qui, lorsqu'elles sont exécutées par un processeur, amènent le processeur à exécuter le procédé mis en oeuvre par ordinateur selon l'une quelconque des revendications 9 à 11.

FIG. 1

Communications Satellite

Transmission

SATCOM Terminal

Electronically Steerable Antennas (ESA)

OUTDOOR EQUIPMENT

MODEM

Transceiver (TRX)

INDOOR EQUIPMENT

User Data/Operational Configuration

Antenna Controller Unit (ACU)

Inertial Navigation System (INS)

FIG. 2

EP 4 096 117 B1

FIG. 3A

## FCC 47 CFR § 25.218 (i) --- Ka-Band

EP 4 096 117 B1

## FIG. 3B

**Antenna Pattern Vs FCC 47 CFR § 25.218 (i) --- Ka-Band**

FIG. 3C

EP 4 096 117 B1

## Antenna Pattern Vs FCC 47 CFR § 25.218 (i) --- Ka-Band

Permitted ESD

COPOL Mask

COPOL Mask '+3dB'

Antenna Pattern

ESD (dBW/MHz)

θ, off-axis angle (degrees)

—— COPOL Mask - Tangent GSO

- - - COPOL Mask "+3dB" - Tangent GSO

—— Wide Beamwidth Antenna Pattern

<u>FIG. 3D</u>

EP 4 096 117 B1

GEO Satellite

GSO Arc Portion

GSO Arc

Contour of
the Aperture

GSO Arc portion projected
onto the Aperture

GSO Arc projected onto
the Aperture (GSO Plane)

Vertical axis of
the Aperture

Skew Angle

Horizontal axis
of the Aperture

FIG. 4

EP 4 096 117 B1

FIG. 5A

FIG. 5B

Vertical axis of the Aperture

Contour of the Circular Aperture (reference)

Effective Aperture Diameter

GSO Plane

Skew Angle

Contour of the Elliptical Aperture

Horizontal axis of the Aperture

Boresight Direction

FIG. 6A

EP 4 096 117 B1

FIG. 6B

FIG. 6C

Height/Profile

Radome

Dual Aperture
(TX and Rx)

Positioner

Radome

Contour of
the Radome

Solid Revolution
of the Aperture
plus Positioner

Dual Aperture
(TX and Rx)

Positioner

Dual Aperture
(TX and Rx)

FIG. 7A

EP 4 096 117 B1

Height/Profile

RX Aperture

Radome

TX Aperture

Radome

Contour of
the Radome

RX Aperture
i.e. electronically
steerable antenna

TX Aperture
i.e. electronically
steerable antenna

RX Aperture

FIG. 7B

FIG. 8

FIG. 9

FIG. 10

Scan Losses

FIG. 11A

EP 4 096 117 B1

Effective Aperture Diameter Vs Scan Angle and Skew Angle

Scan Angle: 0 degrees
Scan Angle: 30 degrees
Scan Angle: 50 degrees
Scan Angle: 70 degrees

FIG. 11B

EP 4 096 117 B1

Effective Beamwidth Vs Scan Angle and Skew Angle

FIG. 11C

EP 4 096 117 B1

**EIRP Spectral Density Vs Scan Angle and Skew Angle**

FIG. 11D

EP 4 096 117 B1

Available EIRP Vs Scan Angle and Skew Angle

FIG. 11E

FIG. 12

EP 4 096 117 B1

START

EP 4 096 117 B1

110

OBTAIN SCAN ANGLE θ AND
SKEW ANGLE Φ

120

DETERMINE ANTENNA
ACTIVATION PATTERN

130

CONTROL ANTENNA
USING ANTENNA
ACTIVATION PATTERN

100

ANTENNA ACTIVATION PATTERN

12

FIG. 13

FIG. 14

EP 4 096 117 B1

FIG. 15A

FIG. 15B

EP 4 096 117 B1

FIG. 16

SATELLITE COMMUNICATIONS DEVICE 40

SMART APERTURE ELECTRONICALLY STEERABLE ANTENNA

2

MODEM

42

TRANSCEIVER

46

1

USER DATA & OPERATIONAL CONFIGURATION MODULE

44

SMART APERTURE ANTENNA CONTROLLER UNIT

3

INERTIAL NAVIGATION SYSTEM

50

FIG. 17

FIG. 18

## INPUT VARIABLES

**Antenna Data**
60
- Type
- Pattern
- Gain

**TX Data**
62
- EIRP Max. Available
- ESD Max. Permitted
- Reference ESD Mask

**Link/Service Data**
64
- Frequency, Bandwidth, Bit-rate
- Satellite Details: position, constellation, operating data

**Dynamics Data**
66
- Navigation (attitude, heading)
- Geo-Locattion (latitude, longitude)
- Satelite Orbit Ephemerides

**Actual Operating Data**
68
- Steering Angles
- Operating Parameters

## 3

70

Processing

## OUTPUT VARIABLES

### NEW OPERATING DATA 80

**STEERING ANGLES** 82
- Azimuth
- Elevation

**OPERATING PARAMETERS**
84
- Antenna activation pattern
- ESD
- EIRP
- Bitrate

FIG. 19

EP 4 096 117 B1

FIG. 20

SYSTEM INITIALIZATION — 142

LOAD USER DATA PARAMETERS — 144

LOAD OPERATIONAL PARAMETERS — 146

DYNAMICS — 148

SATELLITE LIST — 152

SATELLITE EPHEMERIDES — 154

LOAD SATELLITE PARAMETERS — 150

SAT POSITION (SP*) — 156

ANTENNA CONTROLLER - COMPUTATION — 158

SKEW ANGLE (SKEW*) — 160

STEERING ANGLES (AZ*, EL*) — 162

UPDATE DYNAMICS AT REFRESH TIME — 184

EMBEDDED INS — 186

ARINC BUS — 188

FIG. 21

FIG. 21

Scan angle θ=0

Boresight direction

Active aperture 13

20

21

FIG. 22A

Boresight direction

Scan angle θ

Active aperture 13

GSO plane 92

Skew angle φ

Effective aperture 90

Effective aperture diameter 91

FIG. 22B

EP 4 096 117 B1

FIG. 23A

FIG. 23B

EP 4 096 117 B1

Scan angle θ=0

Nominal aperture
diameter $D_n$

21

20

Extended aperture
diameter $D_e = \alpha \cdot D_n$

Active
Aperture 13

FIG. 24A

Boresight
Direction

Scan Angle θ

δ=0º

GSO plane 92

φ =0º

Active
Aperture 13

FIG. 24B

EP 4 096 117 B1

Scan Angle θ

Boresight
Direction

Aperture rotation
angle δ

GSO plane 92

Skew angle φ

Active
Aperture 13

FIG. 24C

Smart Aperture Rotation Angle Vs Scan Angle and Skew Angle

EP 4 096 117 B1

FIG. 25

FIG. 26

EP 4 096 117 B1

Spectral Efficiency Improvements

FIG. 27

EP 4 096 117 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10320471 B1
- US 11145976 B2
- US 10277308 B1

- US 2017358851 A1
- US 2021234270 A1